# EUROPEAN PATENT APPLICATION

(11) **EP 3 047 970 A1**
(43) Date of publication of application: **27.07.2016**
(21) Application number: 14846015.7
(22) Date of filing: 19.09.2014
(51) Int. Cl.: B32B 27/18, B29C 45/14, B32B 7/02, B32B 27/30

(54) **ORGANIC GLASS LAMINATE**

(30) Priority: 20.09.2013 JP 2013195688
(71) Applicant: Dai Nippon Printing Co., Ltd., Tokyo 162-8001 (JP)
(72) Inventor: ARITA, Manabu, Tokyo 162-8001 (JP); FUKUDA, Shunji, Tokyo 162-8001 (JP); KIHARA, Takeshi, Tokyo 162-8001 (JP)
(74) Representative: Müller-Boré & Partner Patentanwälte PartG mbB
(86) International application number: PCT/JP2014/074893
(87) International publication number: WO 2015/041334

(57) **Abstract**

The purpose of the present invention is to provide an organic glass laminate having excellent scratch resistance, wear resistance, wet adhesion, transparency, and weather resistance. This organic glass laminate comprises, in the following order, at least an organic glass substrate, a primer layer, and a hard-coat layer, wherein: the hard-coat layer is formed of a cured product of a resin composition including an ionizing-radiation-curable resin and an ultraviolet absorbent; the ultraviolet absorbent is included at a ratio of 0.5-10 parts by mass per a total of 100 parts by mass of the ionizing-radiation-curable resin; and the pencil hardness of the organic glass laminate and the initial value, as well as values found before and after a predetermined accelerated weathering test, of the haze and the yellow index of the organic glass laminate are set so as to fall within specific ranges.

## Description

### TECHNICAL FIELD

The present invention relates to an organic glass laminate having excellent scratch resistance, abrasion resistance, water-resistant adhesion, transparency, and weather resistance. Further, the present invention relates to a method for producing the organic glass laminate.

### BACKGROUND ART

Conventionally, polycarbonate, polymethyl methacrylate, polyacrylate, polyethylene terephthalate, polyethylene naphthalate, polyolefin, ABS, and others are known as a resin material of an organic glass. Among these, polycarbonate has excellent properties such as transparency, mechanical strength, processability, light weight, and heat resistance, and use thereof as a resin glass for a window in a vehicle, an architectural structure, or the like and for a roof of a carport, a terrace, or the like is now attempted. However, the resin used as an organic glass has disadvantages such as low surface hardness and poor scratch resistance and friction properties, and further has disadvantages such as low weather resistance and a tendency of discoloration by exposure to ultraviolet rays.

Therefore, in order to overcome these disadvantages of an organic glass, lamination of a hard-coat layer containing an ultraviolet absorbent onto the organic glass is proposed. Also, because the effect of suppressing the deterioration of resin brought about by the ultraviolet absorbent is generally dependent on the amount of addition thereof, it is known that, when the amount of addition of the ultraviolet absorbent in the hard-coat layer is increased, the function of suppressing the deterioration caused by exposure to ultraviolet rays is enhanced to improve the weather resistance. However, it is known that, when the amount of addition of the ultraviolet absorbent to the hard-coat layer is increased, bleed-out of the ultraviolet absorbent, decrease in the hardness or adhesion of the hard-coat layer, and the like are generated. Also, in the case of forming the hard-coat layer by using a resin of ultraviolet-curable type, there is a problem in that, when the amount of addition of the ultraviolet absorbent is increased, a sufficient hardness cannot be provided due to poor curing even when ultraviolet rays needed for curing the resin is radiated, so that sufficient scratch resistance or friction properties cannot be provided. Further, it can be theoretically considered that, by using a polymer having high weather resistance as the polymer for forming the hard-coat layer, the weather resistance can be provided without the use of the ultraviolet absorbent. However, in current circumstances, a polymer satisfying not only the weather resistance but also other required properties such as hardness, heat resistance, water-resistant adhesion, and the like has not been found yet.

Also, conventionally, as a technique for providing properties such as weather resistance that are required in the organic glass, there is reported a technique of laminating on the organic glass an active energy ray-curable composition containing a polyfunctional (meth)acrylate, a urethane (meth)acrylate obtained by allowing a diol having an alicyclic structure, lactones, a polyisocyanate, and a hydroxyl-containing (meth)acrylate to react, and an ultraviolet absorbent and further satisfying specific conditions (for example, Patent Documents 1 to 3). However, a further technical development is desired in order to follow the demand for improvement in the performance of the organic glass.

### PRIOR ART DOCUMENTS

### PATENT DOCUMENTS

Patent Document 1: Japanese Patent Laid-open Publication No. 2012-81742
Patent Document 2: Japanese Patent Laid-open Publication No. 2012-126760
Patent Document 3: Japanese Patent Laid-open Publication No. 2010-215843

### SUMMARY OF THE INVENTION

### PROBLEMS TO BE SOLVED BY THE INVENTION

An object of the present invention is to provide an organic glass laminate having excellent scratch resistance, abrasion resistance, water-resistant adhesion, transparency, and weather resistance. Further, an object of the invention is to provide a method for producing the organic glass laminate and a laminating sheet for use in organic glass used for producing the organic glass laminate.

### MEANS FOR SOLVING THE PROBLEMS

The present inventors have made eager studies in order to solve the aforementioned problems and found out that excellent scratch resistance, abrasion resistance, water-resistant adhesion, and transparency can be provided by producing an organic glass laminate having at least an organic glass base substrate, a primer layer, and a hard-coat layer in this order, wherein the hard-coat layer is formed of a cured product of a resin composition containing an ionizing-radiation-curable resin and an ultraviolet absorbent; the ultraviolet absorbent is contained at a ratio of 0.5 to 10 parts by mass per a total of 100 parts by mass of the ionizing-radiation-curable resin; and the pencil hardness of the organic glass laminate as well as the initial value and the values found before and after a later-described accelerated weathering test, of the haze and the yellow index of the organic glass laminate are set so as to fall within specific ranges. Further, the present inventors have found out that the organic glass laminate is provided with excellent weather resistance, and generation of cracks, peeling-off, and film decrease of the hard-coat layer can be suppressed while high transparency is maintained with suppressed discoloration even when the organic glass laminate is used for a long period of time in an environment that is exposed to ultraviolet rays, wind, and rainfall.

Also, the present inventors have found out that excellent scratch resistance, abrasion resistance, water-resistant adhesion, and transparency can be provided by producing an organic glass laminate having at least an organic glass base substrate, a primer layer, and a hard-coat layer in this order, wherein the hard-coat layer is formed of a cured product of a resin composition containing an ionizing-radiation-curable resin and an ultraviolet absorbent; the ultraviolet absorbent is contained at 0.5 to 10 parts by mass per a total of 100 parts by mass of the ionizing-radiation-curable resin; and the ionizing-radiation-curable resin contains (i) a tri- or more functional ionizing-radiation-curable resin and (ii) a bifunctional (meth)acrylate monomer in which two (meth)acryloyl groups are bonded via an aliphatic linker region. Further, the present inventors have found out that the organic glass laminate is provided with excellent weather resistance, and generation of cracks, peeling-off, and film decrease of the hard-coat layer can be suppressed while high transparency is maintained with suppressed discoloration even when the organic glass laminate is used for a long period of time in an environment that is exposed to ultraviolet rays, wind, and rainfall. Above all, the present inventors have found out that the properties described above can be provided further more effectively when the (ii) bifunctional (meth)acrylate monomer is (ii-1) a (meth)acrylate monomer in which two (meth)acryloyl groups are bonded to one alicyclic ring or aliphatic heterocyclic ring directly or via a linker region having a molecular weight of 200 or less, or (ii-2) a bifunctional urethane (meth)acrylate monomer in which two (meth)acryloyl groups are bonded to an aliphatic chain via a urethane bond.

The present invention has been completed by further repeating studies on the basis of these findings. That is, the present invention provides inventions of the modes mentioned below.
Item 1. An organic glass laminate having at least an organic glass base substrate, a primer layer, and a hard-coat layer in this order, wherein
   the hard-coat layer is formed of a cured product of a resin composition containing an ionizing-radiation-curable resin and an ultraviolet absorbent; the ultraviolet absorbent is contained at 0.5 to 10 parts by mass per a total of 100 parts by mass of the ionizing-radiation-curable resin;
   the pencil hardness as measured from the hard-coat layer side is HB or more and 2H or less;
   the haze is 3% or less, and the difference in the haze before and after the following accelerated weathering test is 20% or less; and
   the yellow index is 2 or less, and the difference in the yellow index before and after the following accelerated weathering test is 5 or less, where,
   (accelerated weathering test)
   by using an accelerated weathering tester, a total sum of 50 cycles is carried out, with one cycle being under the following conditions (1), (2), and (3):
   (1) ultraviolet ray being radiated at 60 m W/cm², 63°C, and 50 RH% for 20 hours,
   (2) in darkness at 30°C and 98 RH% for 4 hours, and
   (3) water being sprayed for 30 seconds before and after the condition (2).
Item 2. An organic glass laminate having at least an organic glass base substrate, a primer layer, and a hard-coat layer in this order, wherein
   the hard-coat layer is formed of a cured product of a resin composition containing an ionizing-radiation-curable resin and an ultraviolet absorbent; the ultraviolet absorbent is contained at 0.5 to 10 parts by mass per a total of 100 parts by mass of the ionizing-radiation-curable resin; and
   the ionizing-radiation-curable resin contains (i) a tri- or more functional ionizing-radiation-curable resin and (ii) a bifunctional (meth)acrylate monomer in which two (meth)acryloyl groups are bonded via an aliphatic linker region.
Item 3. The organic glass laminate according to Item 2, wherein the molecular weight of the (ii) bifunctional (meth)acrylate monomer is 1200 or less.
Item 4. The organic glass laminate according to Item 2 or 3, wherein the (ii) bifunctional (meth)acrylate monomer is (ii-1) a (meth)acrylate monomer in which two (meth)acryloyl groups are bonded to one alicyclic ring or aliphatic heterocyclic ring directly or via a linker region having a molecular weight of 200 or less, or (ii-2) a bifunctional urethane (meth)acrylate monomer in which two (meth)acryloyl groups are bonded via an aliphatic chain having a urethane bond.
Item 5. The organic glass laminate according to any one of Items 1 to 4, wherein the hard-coat layer has a thickness of 1 to 10 µm.
Item 6. The organic glass laminate according to any one of Items 2 to 5, wherein the (ii) bifunctional (meth)acrylate monomer is contained at I to 40 parts by mass per a total of 100 parts by mass of the (i) tri- or more functional ionizing-radiation-curable resin.
Item 7. The organic glass laminate according to any one of Items 1 to 6, wherein the organic glass base substrate is a base substrate made of polycarbonate.
Item 8. A laminating sheet for use in organic glass having at least a primer layer and a hard-coat layer in this order and being used for lamination onto an organic glass base substrate, wherein
   the hard-coat layer is formed of a cured product of a resin composition containing an ionizing-radiation-curable resin and an ultraviolet absorbent;
   the ionizing-radiation-curable resin contains (i) a tri- or more functional ionizing-radiation-curable resin and (ii) a bifunctional (meth)acrylate monomer in which two (meth)acryloyl groups are bonded via an aliphatic linker region; and
   the ultraviolet absorbent is contained at 0.5 to 10 parts by mass per a total of 100 parts by mass of the ionizing-radiation-curable resin.
Item 9. The laminating sheet for use in organic glass according to Item 8, wherein the (ii) bifunctional (meth)acrylate monomer is (ii-1) a (meth)acrylate monomer in which two (meth)acryloyl groups are bonded to one alicyclic ring or aliphatic heterocyclic ring directly or via a linker region having a molecular weight of 200 or less, or (ii-2) a bifunctional urethane (meth)acrylate monomer in which two (meth)acryloyl groups are bonded via an aliphatic chain having a urethane bond.
Item 10. The laminating sheet for use in organic glass according to Item 8 or 9, wherein
   a resin film layer or an adhesive layer is disposed on a surface on the side that is to be brought into contact with the organic glass base substrate.
Item 11. The laminating sheet for use in organic glass according to any one of Items 8 to 10, which is formed by laminating at least the hard-coat layer, the primer layer, and the adhesive layer sequentially on a support film layer.
Item 12. The laminating sheet for use in organic glass according to any one of Items 8 to 11. which is to be integrated and laminated onto the organic glass base substrate at the time of injection molding of the organic glass base substrate, wherein
   the resin film layer or the adhesive layer is disposed on a surface on the side that is to be brought into contact with the organic glass base substrate. Item 13. A method for producing an organic glass laminate, comprising a step of sticking a surface of the resin film layer or the adhesive layer of the laminating sheet for use in organic glass according to Item 10 or 11 onto the organic glass base substrate. Item 14. A method for producing an organic glass laminate, comprising a step of injecting and molding an organic glass onto the resin film layer or the adhesive layer of the laminating sheet for use in organic glass according to Item 12.

### ADVANTAGES OF THE INVENTION

The organic glass laminate of the present invention is provided with excellent scratch resistance, abrasion resistance, water-resistant adhesion, and transparency. Further, the organic glass laminate of the present invention is provided with excellent weather resistance, so that generation of cracks. peeling-off, and film decrease of the hard-coat layer can be suppressed while high transparency is maintained with suppressed discoloration even when the organic glass laminate is used for a long period of time in an environment that is exposed to ultraviolet rays, wind, and rainfall. In this manner, the organic glass laminate of the present invention exhibits excellent effects with regard to scratch resistance, abrasion resistance, water-resistant adhesion, transparency, and weather resistance, so that the organic glass laminate can be used suitably for a window in a vehicle, an architectural structure, or the like and for a roof of a carport, a terrace, or the like. Also, when the hard-coat layer in the organic glass laminate of the present invention contains (ii-1) a (meth)acrylate monomer in which two (meth)acryloyl groups are bonded to one alicyclic ring or aliphatic heterocyclic ring directly or via a linker region having a molecular weight of 200 or less, or (ii-2) a bifunctional urethane (meth)acrylate monomer in which two (meth)acryloyl groups are bonded to an aliphatic chain via a urethane bond, together with (i) a tri- or more functional ionizing-radiation-curable resin, the above-described effects can be exhibited further more effectively because the number of unreacted functional groups after curing can be decreased and the hard-coat layer can be formed without deteriorating the softness. Further, by using a laminating sheet for use in organic glass of the present invention, an organic glass laminate provided with the aforementioned effects can be produced in a convenient manner.

### BRIEF DESCRIPTION OF THE DRAWINGS

Fig. 1 is a view showing one example of a lamination structure of an organic glass laminate of the present invention.
Fig. 2 is a view showing one example of a lamination structure of an organic glass laminate of the present invention.
Fig. 3 is a view showing one example of a lamination structure of an organic glass laminate of the present invention.
Fig. 4 is a view showing one example of a lamination structure of an organic glass laminate of the present invention.
Fig. 5 is a view showing one example of a lamination structure of an organic glass laminate of the present invention.
Fig. 6 is a view showing one example of a lamination structure of an organic glass laminate of the present invention.
Fig. 7 is a view showing one example of a lamination structure of a laminating sheet for use in organic glass used in producing the organic glass laminate of the present invention.
Fig. 8 is a view showing one example of a lamination structure of a laminating sheet for use in organic glass used in producing the organic glass laminate of the present invention.

### EMBODIMENTS OF THE INVENTION

### 1. Organic glass laminate (1)

An organic glass laminate of the present invention has at least an organic glass base substrate, a primer layer, and a hard-coat layer in this order, wherein the hard-coat layer is formed of a cured product of a resin composition containing an ionizing-radiation-curable resin and an ultraviolet absorbent; the ultraviolet absorbent is contained at 0.5 to 10 parts by mass per a total of 100 parts by mass of the ionizing-radiation-curable resin; the pencil hardness as measured from the hard-coat layer side is HB or more and 2H or less; the haze is 3% or less, and the difference in the haze before and after an accelerated weathering test under the conditions described later is 20% or less; and the yellow index is 2 or less, and the difference in the yellow index before and after the accelerated weathering test under the conditions described later is 5 or less. Hereafter, the organic glass laminate of the present invention will be described in detail.

### Lamination structure

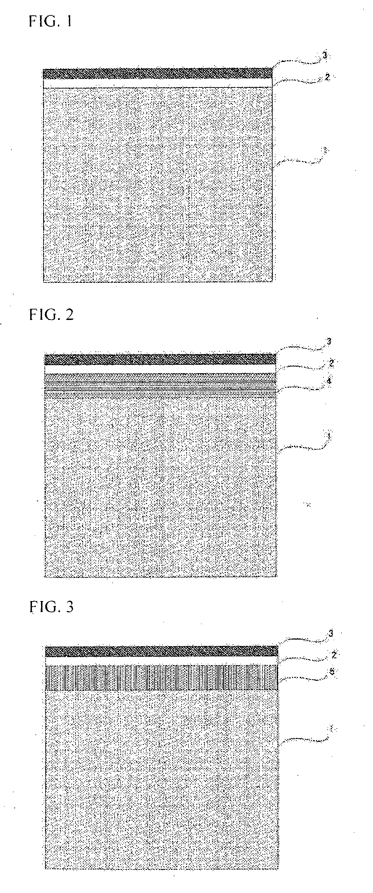

Referring to Fig. 1, an organic glass laminate of the present invention is provided with a lamination structure having at least an organic glass base substrate 1, a primer layer 2, and a hard-coat layer 3 in this order.

Also, in the organic glass laminate of the present invention, an adhesive layer 4 for enhancing adhesiveness to the organic glass base substrate 1 may be disposed on a contact surface of the organic glass base substrate I in accordance with the needs.

Further, in the organic glass laminate of the present invention, a resin film layer 5 may be disposed between the organic glass base substrate 1 and the primer layer 2 as a member for supporting the hard-coat layer 3 in accordance with the needs. Also, in the case in which the adhesive layer 4 and the resin film layer 5 are both provided in the organic glass laminate of the present invention, it is sufficient that, between the organic glass base substrate 1 and the primer layer 2, the adhesive layer 4 is disposed on the side of the organic glass base substrate 1, and the resin film layer 5 is disposed on the side of the primer layer 2.

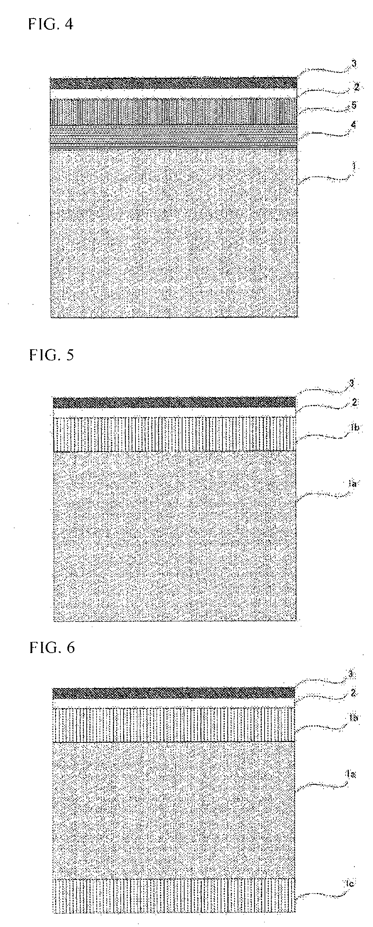

With regard to the organic glass laminate of the present invention, Fig. 2 shows a lamination structure in the case in which the adhesive layer 4 is provided; Fig. 3 shows a lamination structure in the case in which the resin film layer 5 is provided; and Fig. 4 shows a lamination structure in the case in which the adhesive layer 4 and the resin film layer 5 are both provided.

Also, in the organic glass laminate of the present invention, it is possible to adopt a construction in which the primer layer 2 and the hard-coat layer 3 are disposed only on one surface of the organic glass base substrate 1; however, the primer layer 2 and the hard-coat layer 3 may be disposed on both surfaces of the organic glass base substrate 1. In other words, in the latter case, the organic glass laminate of the present invention is provided with a lamination structure having at least the hard-coat layer 3, the primer layer 2, the organic glass base substrate 1, the primer layer 2, and the hard-coat layer 3 in this order.

### Physical property value of organic glass laminate

The organic glass laminate of the present invention satisfies the hardness, the haze, and the yellow index that are within specific ranges shown below. By satisfying physical property values such as these, the organic glass laminate can be provided with excellent scratch resistance, abrasion resistance, water-resistant adhesion, and transparency, and can have good weather resistance, so that generation of cracks, peeling-off, and film decrease of the hard-coat layer can be suppressed while high transparency is maintained with suppressed discoloration even when the organic glass laminate is used for a long period of time in an environment that is exposed to ultraviolet rays, wind, and rainfall.

### <hardness>

In the organic glass laminate of the present invention, it is sufficient that the pencil hardness as measured from the hard-coat layer 3 side is HB or more and 2H or less, preferably HB or more and H or less, more preferably HB or more and F or less. By being provided with such pencil hardness, the organic glass laminate can be provided with excellent abrasion resistance, scratch resistance, and the like, and also, generation of cracks can be suppressed.

The pencil hardness refers to hardness of a pencil when scratches are obtained none or once under conditions in which the applied load on the tip end of the pencil is set to be 1 kg, and the pencil is allowed to travel 5 times for a distance of 10 mm at a speed of 0.5 mm/sec. Also, the measurement of the pencil hardness is carried out by using a pencil prepared by cutting only the wooden part of the pencil so that the core comes to have a cylindrical shape, exposing the core for 5 to 6 mm, and flattening the tip end with an abrasive paper, and setting the angle of the pencil to be 45°.

In order to provide the pencil hardness to the organic glass laminate of the present invention. it is sufficient that the composition, the thickness, and the like of the hard-coat layer are suitably adjusted, and the specific conditions thereof will be described later.

### <Haze>

In the organic glass laminate of the present invention, it is sufficient that the haze is 3% or less, preferably 0 to 2.0%, more preferably 0 to 1.7%. By being provided with such a haze, the organic glass laminate can be provided with excellent transparency. In the present invention, the haze is a value as determined in accordance with the method described in JIS K7136:2000. Also, the haze shown herein is a value that the organic glass laminate before being subjected to actual use is provided with.

Also, the organic glass laminate of the present invention satisfies that a difference in the haze (ΔH) before and after the following accelerated weathering test is 20% or less. The difference in the haze is preferably 0 to 15%, more preferably 0 to 10%. By satisfying such a difference in the haze, the organic glass laminate comes to have excellent weather resistance, and excellent transparency can be maintained for a long period of time even when the organic glass laminate is exposed to ultraviolet rays. Here, the difference in the haze (ΔH) is a value calculated by subtracting the haze obtained before the following accelerated weathering test from the haze obtained after the following accelerated weathering test. Also, the difference in the haze (ΔH) shown herein is a value determined by using an organic glass before being subjected to actual use and carrying out the following accelerated weathering test.

### (Accelerated weathering test)

The accelerated weathering test is carried out in such a manner that, by using an accelerated weathering tester, a total sum of 50 cycles are carried out, with one cycle being under the conditions (1) ultraviolet ray being radiated at 60 m W/cm², 63°C, and 50 RH% for 20 hours, (2) in darkness at 30°C and 98 RH% for 4 hours, and (3) water being sprayed for 30 seconds before and after the condition (2). The haze of the organic glass laminate before and after the accelerated weathering test is measured. Here, the water spraying of (3) is carried out for the purpose of letting water drops adhere onto the hard-coat layer of the organic glass laminate, and the amount of spraying water may be an amount sufficient for the water drops to adhere onto the hard-coat layer of the organic glass laminate.

In order to provide the haze and the difference in the haze before and after the accelerated weathering test in the organic glass laminate of the present invention, it is sufficient that the composition, the thickness, and the like of the hard-coat layer are suitably adjusted, and the specific conditions thereof will be described later.

### <Yellow index>

In the organic glass laminate of the present invention, it is sufficient that the yellow index (YI) is 2 or less, preferably 0.2 to 1.6, more preferably 0.5 to 1.3. By being provided with such a yellow index, the organic glass laminate can be provided with colorless excellent transparency. In the present invention, the yellow index is a value as determined by using a spectrophotometer and measuring the spectral transmittance with a C light source and a viewing angle set to be 2°. Also, the yellow index shown herein is a value that the organic glass laminate before being subjected to actual use is provided with.

Also, the organic glass laminate of the present invention satisfies that a difference in the yellow index (ΔYI) before and after the accelerated weathering test is 5 or less. The difference in the yellow index is preferably 0 to 4.5, more preferably 0 to 4. By satisfying such a difference in the haze, the organic glass laminate comes to have excellent weather resistance, and excellent transparency can be maintained with suppressed discoloration for a long period of time even when the organic glass laminate is exposed to ultraviolet rays. Here, the difference in the yellow index is a value calculated by subtracting the yellow index obtained before the following accelerated weathering test from the yellow index obtained after the accelerated weathering test. Also, the difference in the yellow index (ΔYI) shown herein is a value determined by using an organic glass laminate before being subjected to actual use and carrying out the accelerated weathering test.

In order to provide the yellow index and the difference in the yellow index before and after the accelerated weathering test in the organic glass laminate of the present invention, it is sufficient that the composition, the thickness, and the like of the hard-coat layer are suitably adjusted, and the specific conditions thereof will be described later.

### Composition and the like of each layer constituting the organic glass laminate

Hereafter, the composition, the thickness, and the like of each layer constituting the organic glass laminate of the present invention will be described.

### <Organic glass base substrate 1>

In the organic glass laminate of the present invention, the kind of the organic glass used in the organic glass base substrate 1 is not particularly limited as long as the organic glass is transparent, has strength, and can be used as a substitute for a current glass. Examples of the organic glass include polycarbonate, polymethyl methacrylate, polyacrylate, polyethylene terephthalate, polyethylene naphthalate, polyolefin, and ABS. Among these kinds of organic glass, polycarbonate is suitably used because polycarbonate is excellent in impact resistance and transparency, and moreover, the values of the haze and the yellow index are affected little even when the thickness increases to a certain extent.

In the case in which polycarbonate is used as the organic glass base substrate 1, the melt volume rate (MVR) thereof is not particularly limited; however, the melt volume rate may be 6 to 25 cm³/10 minutes, preferably 6 to 12 cm³/10 minutes. The lower the melt volume rate is, the more the excellent impact resistance is exhibited. Therefore, a polycarbonate resin provided with a suitable melt volume rate may be selected in accordance with the use of the organic glass laminate of the present invention. Here, the melt volume rate is a value as determined under the conditions with a temperature of 300°C and a load of 1.2 kgf according to JIS K 7210-1999.

Also, in the organic glass laminate of the present invention, the organic glass base substrate 1 may be formed by lamination of a plurality of organic glass of the same kind or of different kinds. For example, the organic glass base substrate 1 may have a structure in which a polycarbonate base substrate and a base substrate made of different organic glass are laminated. For example, by using an organic glass base substrate 1 in which a polycarbonate base substrate and a polymethyl methacrylate base substrate are laminated sequentially from the primer layer 2 side or an organic glass base substrate 1 in which a polymethyl methacrylate base substrate, a polycarbonate base substrate, and a polymethyl methacrylate base substrate are laminated sequentially from the primer layer 2 side, the organic glass base substrate 1 can be made to have both the impact resistance brought about by the polycarbonate base substrate and the high hardness brought about by the polymethyl methacrylate base substrate.

Figs. 5 and 6 show examples in the case in which the organic glass base substrate 1 has a multilayer structure as a lamination structure of the organic glass laminate of the present invention. Fig. 5 shows a lamination structure in the case in which the organic glass base substrate 1 has a two-layer structure made of a polycarbonate base substrate 1a and a polymethyl methacrylate base substrate 1b in the organic glass laminate of the present invention. Fig. 6 shows a lamination structure in the case in which the organic glass base substrate 1 has a three-layer structure made of a polymethyl methacrylate base substrate 1c, a polycarbonate base substrate 1a, and a polymelhyl methacrylate base substrate 1b in the organic glass laminate of the present invention.

Also, when the organic glass base substrate I assumes a lamination structure of a plurality, two or more polycarbonate base substrates having different compositions such as physical properties, chemical compositions, and amounts of additives may be laminated. For example, by using an organic glass base substrate 1 in which a hard polycarbonate base substrate having a high molecular weight and a soft polycarbonate base substrate having a low molecular weight are laminated sequentially from the primer layer 2 side, the organic glass base substrate 1 can be made to have higher weather resistance in addition to the impact resistance brought about by the polycarbonate base substrate. Alternatively, in the case of an organic glass base substrate 1 having a three-layer structure made of a first polycarbonate base substrate, a second polycarbonate base substrate, and a third polycarbonate base substrate from the primer layer 2 side, the function as a core material of the second base substrate is enhanced by setting the amount of the ultraviolet absorbent contained in the first polycarbonate base substrate and the second polycarbonate base substrate to be higher than the amount of the ultraviolet absorbent contained in the second polycarbonate base substrate, whereby an excellent impact resistance is ensured by the second base substrate, and also the organic glass base substrate 1 can be made to have higher weather resistance in combination.

The organic glass base substrate 1 formed by lamination of a plurality of organic glass of the same kind or of different kinds in this manner can be prepared, for example, by coextrusion.

The thickness of the organic glass base substrate 1 is not particularly limited and may be suitably set in accordance with the purpose of use of the organic glass laminate; however, the thickness is typically 0.5 to 50 mm, preferably 1 to 20 mm, and more preferably 1.5 to 5 mm.

### <Primer layer 2>

In the organic glass laminate of the present invention, the primer layer 2 is a layer provided for improving the adhesion of the hard-coat layer 3.

The primer layer 2 is formed by using a binder resin. A binder resin that is used as a primer layer in a general laminating sheet for use in organic glass can satisfy the hardness, the haze, and the yellow index described before. Therefore, a binder resin such as a curable resin that is used in a general primer layer is used for forming the primer layer 2 of the present invention. Specific examples of the curable resin include a urethane resin, a (meth)acrylic resin, a (meth)acrylic/urethane copolymer resin, a vinyl chloride/vinyl acetate copolymer resin, a polyester resin, a butyral resin, chlorinated polypropylene, and chlorinated polyethylene. These binder resins may be used either alone as one kind or as a combination of two or more kinds. Among these binder resins, the urethane resin is preferably used.

As the aforementioned urethane resin, it is possible to use, for example, a polyurethane containing a polyol (polyhydric alcohol) as a main agent and containing an isocyanate as a cross-linking agent (curing agent). The polyol may be a compound having two or more hydroxyl groups in a molecules, and specific examples thereof include polyester polyol, polyethylene glycol, polypropylene glycol, acrylic polyol, and polyether polyol. Specific examples of the aforementioned isocyanate include polyisocyanates having two or more isocyanate groups in a molecule; aromatic isocyanates such as 4,4-diphenylmethane diisocyanate; and aliphatic (or alicyclic) isocyanates such as hexamethylene diisocyanate, isophorone diisocyanate, hydrogenated tolylene diisocyanate, and hydrogenated diphenylmethane diisocyanate.

The primer layer 2 may contain a light stabilizer in accordance with the needs in order to further improve the weather resistance. As a preferable light stabilizer, a hindered amine-based light stabilizer (HALS) may be mentioned. These light stabilizers may be used either alone as one kind or in combination of two or more kinds.

The primer layer 2 is formed by applying a resin composition containing a binder resin for forming a primer layer onto the hard-coat layer 3 or onto the resin film layer 4, which is disposed in accordance with the needs, by a known customary application method such as gravure coating, gravure reverse coating, gravure offset coating, spinner coating, roll coating, reverse roll coating, kiss coating, wheeler coating, dip coating, solid coating with a silk screen, wire bar coating, flow coating, comma coating, free-flowing coating, brush painting, or spray coating, or the transfer coating method. Here, the transfer coating method is a method of forming an applied film of the primer layer 2 on a thin sheet (film base substrate) and thereafter covering a surface of the hard-coat layer 3 or the resin film layer 4, which is disposed in accordance with the needs, with the applied film.

The thickness of the primer layer 2 is not particularly limited; however, the thickness may be, for example, 0.1 to 10 µm, preferably 0.1 to 5 µm, more preferably 1 to 4 µm.

### <Hard-coat layer 3>

In the organic glass laminate of the present invention, the hard-coat layer 3 is a layer that is provided as a surface layer on the primer layer 2. The hard-coat layer 3 is made of a cured product of a resin composition containing an ionizing-radiation-curable resin and an ultraviolet absorbent, where the ultraviolet absorbent is contained at 0.5 to 10 parts by mass per a total of 100 parts by mass of the ionizing-radiation-curable resin. By using the cured product of the resin composition containing the ionizing-radiation-curable resin and the ultraviolet absorbent as the hard-coat layer 3 in this manner, the organic glass laminate can be provided not only with abrasion resistance and weather resistance but also with scratch resistance and water-resistant adhesion that cannot be obtained by a silicone hard-coat layer formed with use of a polysiloxane. The hard-coat layer 3 constitutes a major cause of affecting the hardness, the haze, and the yellow index described above, so that the composition and the thickness thereof are suitably set so as to satisfy these physical property values.

### (Ionizing-radiation-curable resin)

The ionizing-radiation-curable resin may be specifically, for example, a prepolymer, an oligomer, and/or a suitable mixture of monomers, which contains functional groups (polymerizable unsaturated bonds and/or epoxy groups) in a molecule. Here, the ionizing radiation refers to one having an energy quantum that can polymerize or cross-link molecules among the electromagnetic waves or charged particle beams. Typically, ultraviolet rays or an electron beam is used as the ionizing radiation. However, the ionizing radiation is preferably an electron beam in order to avoid a situation in which curing of the hard-coat layer 3 becomes insufficient due to action of the ultraviolet absorbent contained in the hard-coat layer 3.

The kind of the ionizing-radiation-curable resin used in the hard-coat layer 3 may be suitably set so as to satisfy the hardness, the haze, and the yellow index described above, so that the kind is not particularly limited as long as these physical property values are satisfied. A suitable example of the ionizing-radiation-curable resin may be a combination of (i) a tri- or more functional ionizing-radiation-curable resin and (ii) a bifunctional (meth)acrylate monomer in which two (meth)acryloyl groups are bonded via an aliphatic linker region. In particular, by using (ii-1) a (meth)acrylate monomer in which two (meth)acryloyl groups are bonded to one alicyclic ring or aliphatic heterocyclic ring directly or via a linker region having a molecular weight of 200 or less, or (ii-2) a bifunctional urethane (meth)acrylate monomer in which two (meth)acryloyl groups are bonded via an aliphatic chain having a urethane bond as the (ii) bifunctional (meth)acrylate monomer, the hard-coat layer 3 can be imparted with excellent water resistance, whereby the adhesion of the hard-coat layer 3 can be maintained without being deteriorated even when brought into contact with water, so that the desired properties described above can be suitably provided. Here, in the present invention, the (meth)acrylate means an acrylate or a methacrylate, and other similar notations have the same meaning. Hereafter, the (i) tri- or more functional ionizing-radiation-curable resin and (ii) bifunctional (meth)acrylate monomer will be described.

### [(i) Tri- or more functional ionizing-radiation-curable resin]

The (i) tri- or more functional ionizing-radiation-curable resin is not particularly limited as long as the resin is an ionizing-radiation-curable resin in which three or more functional groups are introduced, and a preferable example thereof may be a polyfunctional (meth)acrylate having two or more polymerizable unsaturated bonds (two or more functional groups) in a molecule. Examples of the polyfunctional (meth)acrytate include a pentaerythritol-based (meth)acrylate, a polycarbonate (meth)acrylate, a urethane (meth)acrylate, an epoxy (meth)acrylate, a polyester (methacrylate, a polyether (meth)acrylate, a polybutadiene (meth)acrylate, a silicone (meth)acrylate, and an aminoplast resin (meth)acrylate, Here, the pentaerythritol-based (meth)acrylate can be obtained, for example, by esterifying, with (meth)acrylic acid, a part or a whole of the hydroxyl groups of pentaerythritol or a polymerized product thereof. The polycarbonate (meth)acrylate can be obtained, for example, by esterifying, with (meth)acrylic acid, a part or a whole of the hydroxyl groups of polycarbonate polyol. The urethane (meth)acrylale can be obtained, for example, by esterifying, with (meth)acrylic acid, a polyurethane oligomer obtained by reaction of a polyol such as a polyether polyol, a polyester polyol, or a polycarbonate polyol with a polyisocyanate. The epoxy (meth)acrylate can be obtained, for example, by esterification allowing (meth)acrylic acid to react with an oxirane ring of a bisphenol-type epoxy resin or a novolak-type epoxy resin having a comparative low molecular weight. Also, a carboxyl-modified type epoxy (meth)acrylate obtained by partially modifying this epoxy (meth)acrylate with dibasic carboxylic anhydride can be used as well. The polyester (meth)acrylate can be obtained, for example, by esterifying, with (meth)acrylic acid, a hydroxyl group of a polyester oligomer having the hydroxyl group at two terminal ends, which is obtained by condensation of a polyvalent carboxylic acid and a polyhydric alcohol, or by esterifying, with (meth)acrylic acid, a hydroxyl group at a terminal end of an oligomer obtained by adding an alkylene oxide to a polyvalent carboxylic acid. The polyether (meth)acrylate can be obtained by esterifying, with (meth)acrylic acid, a hydroxyl group of polyether polyol. The polybutadiene (meth)acrylate can be obtained by adding (meth)acrylate acid to the side chain of a polybutadiene oligomer. The silicone (meth)acrylate can be obtained by modifying, with (meth)acrylic acid, a silicone having a polysiloxane bond in the main chain. The aminoplast resin (meth)acrylate can be obtained by modifying, with (meth)acrylic acid, an aminoplast resin having a lot of reactive groups in a small molecule. These tri- or more functional ionizing-radiation-curable resins may be used either alone as one kind or as a combination of two or more kinds.

The number of functional groups in the tri- or more functional ionizing-radiation-curable resin is not particularly limited as long as the number is three or more; however, the number may be, for example, 3 to 50, preferably 3 to 8, more preferably 4 to 6, in view of satisfying the above-described hardness, haze, and yellow index and providing excellent scratch resistance, abrasion resistance, and a transparency-maintaining function further more effectively.

The average molecular weight of the tri- or more functional ionizing-radiation-curable resin may differ depending on the kind thereof and cannot be uniformly defined; however, the average molecular weight may be, for example, 200 to 100000, preferably 500 to 50000, and more preferably 1000 to 30000. Here, the average molecular weight of a tri- or more functional ionizing-radiation-curable resin refers to a weight-average molecular weight as determined by GPC analysis and converted in terms of standard polystyrene.

Among these, a preferable example thereof may be a urethane (meth)acrylate, more preferably a urethane (meth)acrylate having a skeleton of polyether, polyester, polycarbonate, or the like, in view of satisfying the above-described hardness, haze, and yellow index and providing excellent scratch resistance, abrasion resistance, and a transparency-maintaining function further more effectively.

These tri- or more functional ionizing-radiation-curable resins may be used either alone as one kind or as a combination of two or more kinds.

### [(ii) Bifunctional (meth)acrylate monomer]

It is sufficient that the (ii) bifunctional (meth)acrylate monomer has a structure in which two (meth)acryloyl groups are bonded via a cyclic or straight-chain aliphatic linker region. Also, the molecular weight of the (ii) bifunctional (meth)acrylate monomer is not particularly limited, and may be about 100 to 10000. The molecular weight of the (ii) bifunctional (meth)acrylate monomer is preferably 190 to 1200, more preferably 190 to 600, in view of satisfying the above-described hardness, haze, and yellow index, providing excellent scratch resistance, abrasion resistance, and a transparency-maintaining function further more effectively, and making it less likely that the component such as the ultraviolet absorbent is eliminated from the hard-coat layer 3 by making dense the molecular cross-linking structure of the hard-coat layer 3.

The ratio of the (i) tri- or more functional ionizing-radiation-curable resin to the (ii) bifunctional (meth)acrylate monomer is not particularly limited; however, it is preferable to use the (i) tri- or more functional ionizing-radiation-curable resin as a main agent, and the ratio may be, for example, such that the (ii) bifunctional (meth)acrylate monomer is contained at 1 to 40 parts by mass, preferably 5 to 35 parts by mass, more preferably 10 to 30 parts by mass, relative to 100 parts by mass of the (i) tri- or more functional ionizing-radiation-curable resin.

Also, as described before, a preferable example of the (ii) bifunctional (meth)acrylate monomer may be (ii-1) a (meth)acrylate monomer in which two (meth)acryloyl groups are bonded to one alicyclic ring or aliphatic heterocyclic ring directly or via a linker region having a molecular weight of 200 or less or (ii-2) a bifunctional urethane (meth)acrylate monomer in which two (meth)acryloyl groups are bonded to an aliphatic chain via a urethane bond. Also, as the (ii) bifunctional (meth)acrylate monomer, it is possible to use either (ii-1) a (meth)acrylate monomer in which two (meth)acryloyl groups are bonded to one alicyclic ring or aliphatic heterocyclic ring directly or via a linker region having a molecular weight of 200 or less or (ii-2) a bifunctional urethane (meth)acrylate monomer in which two (meth)acryloyl groups are bonded via an aliphatic chain having a urethane bond singly, or these may be used in combination. Hereafter, these bifunctional (meth)acrylate monomers will be described. Here, in the present specification, the notation of "(ii) bifunctional (meth)acrylate monomer" is meant to include both of the (ii-1) bifunctional (meth)acrylate monomer and the (ii-2) bifunctional urethane (meth)acrylate monomer.

### (ii-1) bifunctional (meth)acrylate monomer

The (ii-1) bifunctional (meth)acrylate monomer is not particularly limited as long as the (ii-1) bifunctional (meth)acrylate monomer has a structure having one alicyclic ring or heterocyclic ring in one molecule and having two (meth)acryloyl groups (-C(=O)-CH(or CH₃)=CH₂) that are bonded to the alicyclic ring or heterocyclic ring directly or via a linker region having a molecular weight of 200 or less.

The alicyclic ring or heterocyclic ring that the (ii-1) bifunctional (meth)acrylate monomer has may have either a monocyclic ring structure or a condensed ring structure. Also, the number of members in the alicyclic ring or heterocyclic ring (number of members in the case of a monocyclic ring structure) is not particularly limited; however, the number may be, for example, 5 to 10, preferably 5 to 8, and more preferably 5 to 6. Also, the alicyclic ring or heterocyclic ring may be a condensed ring obtained by condensation of, for example, 2 to 4, preferably 2 to 3, alicyclic rings or heterocyclic rings (monocyclic rings) having the number of members.

A preferable example of the (ii-1) bifunctional (meth)acrylate monomer may be one having an alicyclic ring.

Specific examples of the alicyclic ring or heterocyclic ring include dicyclopentane, tricyclodecane, cyclohexane, triazine, cyclopentane, and isocyanurate. Among these, preferable examples include dicyclopentane and tricyclodecane.

Also, the alicyclic ring or heterocyclic ring may have a substituent in addition to the (meth)acryloyl groups that are bonded directly or via a linker region having a molecular weight of 200 or less. The kind of the substituent is not particularly limited; however, the substituent may be, for example, an alkyl group having a carbon number of 1 to 5, an alkoxyl group having a carbon number of 1 to 5, a hydroxyalkyl group having a carbon number of 1 to 5, a hydroxyl group, a halogen atom, or the like. Also, the number of the substituents may differ depending on the structure of the alicyclic ring or heterocyclic ring or the like, and cannot be uniformly defined; however, the number may be, for example, 0 to 14, preferably 0 to 10, and more preferably 0 to 6.

In the (ii-1) bifunctional (meth)acrylate monomer, the (meth)acryloyl groups may be linked to the alicyclic ring or heterocyclic ring directly, or the (meth)acryloyl groups may be bonded to the alicyclic ring or heterocyclic ring via a linker. In the case in which the (meth)acryloyl groups are bonded to the alicyclic ring or heterocyclic ring via a linker, it is sufficient that the molecular weight of the linker moiety is 200 or less, preferably 14 to 200, more preferably 14 to 150, and still more preferably 14 to 120. Also, the structure of the linker is not particularly limited as long as the molecular weight range is satisfied; however, the linker may be, for example, an alkylene group having a carbon number of 1 to 8; a bond such as a urethane bond, an ester bond, an ether bond, a thioether bond, or an amide bond: or a linker in which the bond is contained in an alkylene group having a carbon number of 1 to 4, or the like

Specific examples of the linker include groups represented by the following general formulas (A) to (J).

### [Chemical formula 1]

- (CH₂)ₙ₁-O- (A)
- (CH₂)ₙ₂-NHC(=O)O-(CH₂)ₙ₃-O- (B)
- (CH₂)n₄-OC(=O)NH-(CH₂)ₙ₅-O- (C)
- (CH₂)ₙ₂-C(=O)O-(CH₂)ₙ₃-O- (D)
- (CH₂)ₙ₄-OC(=O)-(CH₂)ₙ₅-O- (E)
- (CH₂)ₙ₄-NHC(=O)-(CH₂)ₙ₅-O- (F)
- (CH₂)n₄-C(=O)NH-(CH₂)ₙ₅-O- (G)
- (CH₂)ₙ₆-O-(CH₂)ₙ₇-O- (H)
- (CH₂)ₙ₆-S-(CH₂)ₙ₇-O- (I)
- O- (J)

With regard to each of the groups represented by the general formulas (A) to (J), the left end thereof is bonded to the alicyclic ring or heterocyclic ring, and the right end thereof is bonded to the (meth)acryloyl group.

In the general formula (A), n₁ represents an integer of 1 to 8, preferably 1 to 6, more preferably 1 to 4.

In the general formulas (B) and (D), n2 represents an integer of 0 to 6, preferably 0 to 4, more preferably 0 to 2. Also, in the general formulas (B) and (D), n3 represents an integer of 1 to 6, preferably 1 to 4, more preferably 1 to 2. Here, a sum of n2 and n3 is 12 or less, preferably 6 or less, more preferably 4 or less.

In the general formulas (C), (E), (F) and (G), n4 represents an integer of 0 to 6, preferably 0 to 4, more preferably 0 to 2. Also, in the general formulas (C), (E), (F) and (G), n5 represents an integer of 0 to 6, preferably 0 to 4, more preferably 0 to 2. Here, a sum of n4 and n5 is 12 or less, preferably 6 or less, more preferably 4 or less.

In the general formulas (H) and (I), n6 represents an integer of 0 to 6, preferably 0 to 4, more preferably 0 to 2. Also, in the general formulas (H) and (I), n7 represents an integer of 1 to 6, preferably 1 to 4, more preferable 1 to 2. Here, a sum of n6 and n7 is 12 or less, preferably 6 or less, more preferably 4 or less.

A specific example of the (ii-1) bifunctional (meth)acrylate monomer may be a compound represented by the following general formula (1).

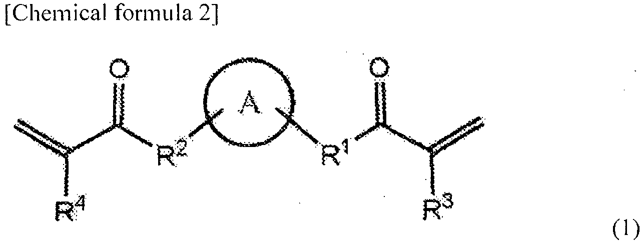

In the general formula (1), the ring A represents a compound having one to three substituted or unsubstituted alicyclic groups or heterocyclic groups. Specific examples of the alicyclic group or heterocyclic group are as described above. Also, in the general formula (1), R1 and R2 are the same as or different from each other, and each represent a single bond or a linker having a molecular weight of 200 or less. Specific examples of the linker are as described above. Also, in the general formula (1), R3 and R4 are the same as or different from each other, and each represent a hydrogen atom or a methyl group.

The molecular weight of the (ii-1) bifunctional (meth)acrylate monomer is not particularly limited as long as the above-described structure is satisfied; however, the molecular weight may be, for example, 200 to 1200, preferably 200 to 800, more preferably 300 to 500.

Specific examples of the (ii-1) bifunctional (meth)acrylate monomer include a (meth)acrylate monomer obtained by a urethane bond of two molecules of a hydroxyalkyl (meth)acrylate (the carbon number of the hydroxyalkyl group being 1 to 4, preferably 1 to 2) to one molecule of isophorone diisocyanate, tricyclodecanedimethanol diacrylate, dicyclopentanyl di(meth)acrylate, caprolactone-modified dicyclopentenyl di(meth)acrylate, allylated cyclohexyl di(meth)acrylate, and isocyanurate di(meth)acrylate. Among these, preferable examples thereof include a (meth)acrylate monomer obtained by a urethane bond of two molecules of a hydroxyalkyl (meth)acrylate to one molecule of isophorone diisocyanate, and tricyclodecanedimethanol diacrylate.

The (ii-1) bifunctional (meth)acrylate monomer may be used either alone as one kind or as a combination of two or more kinds.

The ratio of the (i) tri- or more functional ionizing-radiation-curable resin to the (ii-1) bifunctional (meth)acrylate monomer is not particularly limited; however, it is preferable to use the (i) tri- or more functional ionizing-radiation-curable resin as a main agent, and the ratio may be, for example, such that the (ii-1) bifunctional (meth)acrylate monomer is contained at 1 to 40 parts by mass, preferably 5 to 35 parts by mass, more preferably 10 to 30 parts by mass, relative to 100 parts by mass of the (i) tri- or more functional ionizing-radiation-curable resin.

### (ii-2) Bifunctional urethane (meth)acrylate monomer

The (ii-2) bifunctional urethane (meth)acrylate monomer is not particularly limited as long as the (ii-2) bifunctional urethane (meth)acrylate monomer has a structure in which two (meth)acryloyl groups (-C(=O)-CH(or CH₃)=CH₂) are bonded via an aliphatic chain having a urethane bond.

It is preferable that, in the (ii-2) bifunctional urethane (meth)acrylate, monomer, the urethane bond is present not at the uttermost terminal end of the aliphatic chain but in the form of being incorporated in the aliphatic chain.

The total number of carbon atoms constituting the aliphatic chain (the number of carbon atoms other than the urethane bond moiety in the region excluding the two (meth)acryloyl groups in the bifunctional urethane (meth)acrylate monomer) is not particularly limited; however, the total number of carbon atoms may be, for example, 2 to 90, preferably 2 to 70, more preferably 2 to 50.

In the (ii-2) bifunctional urethane (meth)acrylate monomer, the aliphatic chain may contain a bond other than the urethane bond. Examples of the bond other than the urethane bond include an ester bond, an amide bond, an ether bond, a carbonate bond, and a thioether bond.

In the (ii-2) bifunctional urethane (meth)acrylate monomer, a specific example of the aliphatic chain containing the urethane bond may be a group represented by the following general formula (K).

[Chemical formula 3] -(CH₂)ₙ₈-OC(=O)NH-(CH₂)ₙ₉-NHC(=O)O-(CH₂)ₙ₁₀- (K)

In the general formula (K), n₈ and n₁₀ are the same as or different from each other, and each represent an integer of 1 to 35, preferably 2 to 25, more preferably 2 to 8, and still more preferably 2 to 6. Also, in the general formula (K), n₉ represents an integer of 1 to 35, preferably 2 to 25, more preferably 2 to 20, and still more preferably 2 to 8. Here, a sum of n₈, n₉, and n₁₀ is 90 or less, preferably 3 to 70, more preferably 6 to 50, still more preferably 6 to 24, and most preferably 6 to 20.

A specific example of the (ii-2) bifunctional urethane (meth)acrylate monomer may be a compound represented by the following general formula (2).

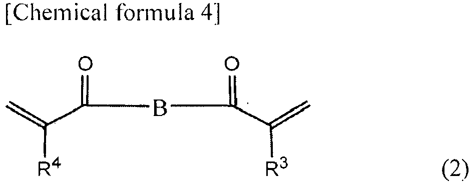

In the general formula (2), the group B represents the aliphatic chain having a urethane bond. Specific examples of the aliphatic chain are as described above. Also, in the general formula (2), R3 and R4 are the same as or different from each other, and each represent a hydrogen atom or a methyl group.

The molecular weight of the (ii-2) bifunctional urethane (meth)acrylate monomer is not particularly limited as long as the above-described structure is satisfied; however, the molecular weight may be, for example, 190 to 5000. In particular, the molecular weight of the (ii-2) bifunctional urethane (meth)acrylate monomer is preferably 190 to 1200, more preferably 190 to 600, in view of making it less likely that the component such as the ultraviolet absorbent is eliminated from the hard-coat layer 3 by making dense the molecular cross-linking structure of the hard-coat layer 3.

The (ii-2) bifunctional urethane (meth)acrylate monomer may be used either alone as one kind or as a combination of two or more kinds.

The ratio of the (i) tri- or more functional ionizing-radiation-curable resin to the (ii-2) bifunctional urethane (meth)acrylate monomer is not particularly limited; however, it is preferable to use the (i) tri- or more functional ionizing-radiation-curable resin as a main agent, and the ratio may be, for example, such that the (ii-2) bifunctional urethane (meth)acrylate monomer is contained at 1 to 40 parts by mass, preferably 5 to 35 parts by mass, more preferably 10 to 30 parts by mass, relative to 100 parts by mass of the (i) tri- or more functional ionizing-radiation-curable resin.

### [Other ionizing-radiation-curable resins]

When the (i) tri- or more functional ionizing-radiation-curable resin and the (ii) bifunctional (meth)acrylate monomer are used in combination as the ionizing-radiation-curable resin, a monofunctional (meth)acrylate monomer, a tri- or more functional (meth)acrylate monomer, a bifunctional ionizing-radiation-curable resin, and the like may be contained in accordance with the needs in addition to these ionizing-radiation-curable resins within a range that does not deteriorate the effects of the present invention. A sum amount of the (i) tri- or more functional ionizing-radiation-curable resin and the (ii) bifunctional (meth)acrylate monomer per a total of 100 parts by mass of the ionizing-radiation-curable resins contained in the hard-coat layer 3 may be, for example, 50 to 100 parts by mass, preferably 70 to 100 parts by mass, and more preferably 80 to 100 parts by mass.

More specifically, when the (i) tri- or more functional ionizing-radiation-curable resin and the (ii-1) bifunctional (meth)acrylate monomer are used in combination, a sum amount of the (i) tri- or more functional ionizing-radiation-curable resin and the (ii-1) bifunctional (meth)acrylate monomer per a total of 100 parts by mass of the ionizing-radiation-curable resins contained in the hard-coat layer 3 may be, for example, 50 to 100 parts by mass, preferably 60 to 100 parts by mass, and more preferably 60 to 80 parts by mass. Also, when the (i) tri- or more functional ionizing-radiation-curable resin and the (ii-2) bifunctional urethane (meth)acrylate monomer are used in combination, a sum amount of the (i) tri- or more functional ionizing-radiation-curable resin and the (ii-2) bifunctional urethane (meth)acrylate monomer per a total of 100 parts by mass of the ionizing-radiation-curable resins contained in the hard-coat layer 3 may be, for example, 60 to 100 parts by mass, preferably 80 to 100 parts by mass.

### (Ultraviolet absorbent)

The kind of the ultraviolet absorbent used in the hard-coat layer 3 is not particularly limited, and examples thereof include a hydroxyphenyltriazine-based compound, a benzotriazole-based compound, a benzophenone-based compound, an oxanilide-based compound, a phenyl salicylate-based compound, and an acrylonitrile-based compound. Among these, preferable examples thereof include a hydroxyphenyltriazine-based compound and a benzotriazole-based compound, and more preferable examples thereof include a hydroxyphenyltriazine-based compound. These ultraviolet absorbents may be used either alone as one kind or in combination of two or more kinds.

It is sufficient that the content of the ultraviolet absorbent relative to a total of 100 parts by mass of the ionizing-radiation-curable resin is 0.5 to 10 parts by mass, preferably 1 to 10 parts by mass, more preferably 1 to 5 parts by mass, and still more preferably 1 to 2 parts by mass. When the ultraviolet absorbent is contained at such a content, the above-described hardness, haze, and yellow index are satisfied while bleed-out of the ultraviolet absorbent and peeling-off of the hard-coat are suppressed layer 3, whereby excellent scratch resistance, abrasion resistance, and a transparency-maintaining function can be provided further more effectively.

Also, when the (i) tri- or more functional ionizing-radiation-curable resin and the (ii) bifunctional) (meth)acrylate monomer are used in combination as the ionizing-radiation-curable resin, the ultraviolet absorbent is retained stably in the hard-coat layer 3 even if the content of the ultraviolet absorbent relative to a total of 100 parts by mass of the ionizing-radiation-curable resin is set to be as high as 1 to 10 parts by mass, preferably 2 to 8 parts by mass. Therefore, bleed-out of the ultraviolet absorbent and decrease in the performance such as decrease in the hardness can be suppressed, and discoloration, deterioration, and the like of the resin caused by exposure to ultraviolet rays, wind, and rainfall can be effectively suppressed.

### (Other added components)

The hard-coat layer 3 may contain, in addition to the above-described components, a light stabilizer in accordance with the needs in order to further improve the weather resistance. As a preferable light stabilizer, a hindered amine-based light stabilizer (HALS) may be mentioned. Also, a suitable example of the light stabilizer may be an electron-beam-reactive hindered amine-based light stabilizer having reactivity with an electron-beam-curable resin, that is, having an electron-beam-reactive group in a molecule. By using an electron-beam-reactive hindered amine-based light stabilizer such as this, the scratch resistance can be improved without generating inhibition of cross-linking, and also the bleed-out can be reduced, whereby decrease in the performance caused by the bleed-out can be effectively suppressed. A specific example of the electron-beam-reactive group may be a functional group having an ethylenic double bond, such as a (meth)acryloyl group, a vinyl group, and an allyl group. Preferable examples of the light stabilizer such as this include 1,2,2,6,6-pentamethyl-4-piperidinyl methacrylate (manufactured by BASF SE, trade name: "SANOL LS-3410") or (manufactured by Hitachi Chemical Company, Ltd., trade name: "FA-711MM") and 2,2,6,6-tetramethyl-4-piperidinyl methacrylate (manufactured by Hitachi Chemical Company, Ltd., trade name: "FA-7121HM"). These light stabilizers may be used either alone as one kind or in combination of two or more kinds.

The content of the light stabilizer is not particularly limited, and may be, for example, 0.5 to 10 parts by mass, preferably 1 to 8 parts by mass, and more preferably 2 to 6 parts by mass, relative to a total of 100 parts by mass of the ionizing-radiation-curable resin.

Further, in accordance with the needs, the hard-coat layer 3 may contain various additives other than those described above within a range that does not deteriorate the effects of the present invention. Examples of such additives include abrasion resistance improvers, polymerization inhibitors, crosslinkers, infrared absorbents, antistatic agents, adhesiveness improvers, leveling agents, thixotropy imparting agents, coupling agents, lubricants, antifouling agents, plasticizers, antifoaming agents, filling agents, solvents, colorants, and fillers.

### (Thickness)

The thickness of the hard-coat layer 3 may be suitably set to be within a range that can satisfy the above-described hardness, haze, and yellow index in accordance with the composition of the hard-coat layer 3. Typically, the thickness may be 1 to 10 µm, preferably 1.5 to 6 µm, more preferably 2 to 4 µm. By satisfying a thickness such as this, excellent scratch resistance, abrasion resistance, and a transparency-maintaining function can be provided further more effectively while the above-described hardness, haze, and yellow index are satisfied.

### (Formation of hard-coat layer 3)

The hard-coat layer 3 is formed, for example, by applying a resin composition, which is a mixture of an electron-radiation-curable resin, an ultraviolet absorbent, and other additives that are allowed to be contained in accordance with the needs, onto the primer layer 2 or onto a support film layer 6 described later by a method such as gravure coating, bar coating, roll coating, reverse roll coating, or comma coating, and radiating an ionizing radiation such as an electron beam or an ultraviolet ray onto the resin composition thereby to cure the resin composition. When ultraviolet ray radiation is adopted in curing the electron-radiation-curable resin, the curing may possibly become insufficient due to the action of the ultraviolet absorbent contained in the resin composition, so that the electron-radiation-curable resin is preferably cured by electron beam radiation.

In the case in which an electron beam is used for curing the ionizing-radiation-curable resin, an acceleration voltage thereof can be suitably set in accordance with the kind of the ionizing-radiation-curable resin that is put to use, the thickness of the surface protective layer, and the like; however, the acceleration voltage may be typically about 70 kV to about 300 kV. Also, the dose of radiation is preferably such that the cross-linking density of the hard-coat layer 3 is saturated, and the dose of radiation is typically selected from within a range of 5 to 300 kGy (0.5 to 30 Mrad), preferably 10 to 100 kGy (1 to 10 Mrad). Further, an electron beam source is not particularly limited, so that various kinds of electron beam accelerators such as, for example, a Cockcroft-Walton type, a Van de Graaff type, a resonance transformer type, an insulated core transformer type, a linear type, a dynamitron type, and a high-frequency type can be used.

Various kinds of additives can be added to the hard-coat layer 3 thus formed, so as to perform a treatment of imparting functions such as a hard-coating function, an antifog coating function, an antifouling coating function, an antiglare coating function, an antireflection coating function, an ultraviolet-shielding coating function, and an infrared-shielding coating function.

### <Adhesive layer 4>

The adhesive layer 4 is a layer that is disposed between the primer layer 2 and the organic glass base substrate 1 in accordance with the needs in order to enhance adhesiveness to the organic glass base substrate 1. When the resin film layer 5 described later is disposed in the organic glass laminate of the present invention, the adhesive layer 4 is disposed between the resin film layer 5 and the organic glass base substrate 1.

An adhesive resin, such as a heat-sensitive adhesive or a pressure-sensitive adhesive, which is used as an adhesive layer in a general laminating sheet for use in organic glass can satisfy the above-described hardness, haze, and yellow index. Therefore, it is sufficient that the adhesive layer 4 in the present invention is an adhesive layer constituted of an adhesive resin, such as a heat-sensitive adhesive or a pressure-sensitive adhesive, which is used in a general adhesive layer; however, a preferable example thereof is a heat-sealing layer that exhibits a welding function by being heated. Specific examples of the adhesive resin constituting the adhesive layer 4 include an acrylic resin, a vinyl chloride resin, a vinyl acetate resin, a vinyl chloride-vinyl acetate copolymer resin, a styrene-acrylic copolymer resin, a polyester resin, a polyamide resin, and a polyolefin resin. These adhesive resins may be used either alone as one kind or in combination of two or more kinds.

The thickness of the adhesive layer 4 may be typically 0.1 to 10 µm, preferably 0.5 to 6 µm, more preferably 1 to 4 µm.

The adhesive layer 4 is formed by applying an adhesive resin onto a predetermined layer by a method such as gravure coating, bar coating, roll coating, reverse roll coating, or comma coating.

### <Resin film layer 5>

The resin film layer 5 is a layer that is disposed between the primer layer 2 and the organic glass base substrate 1 in accordance with the needs as a support member of the hard-coat layer 3. When the adhesive layer 4 is provided, the resin film layer 5 is disposed between the primer layer 2 and the adhesive layer 4.

A transparent resin that is used as a transparent base material film in a general laminating sheet for use in organic glass can satisfy the above-described hardness, haze, and yellow index. Therefore, a transparent resin that is used in a general transparent base material film can be used as the resin film layer 5 in the present invention. Also, because the primer layer 2 and the hard-coat layer 3 are laminated via the resin film layer 5, it is preferable that the resin film layer 5 is constituted of a resin having a heat-fusion property. Preferable examples of the resin constituting the resin film layer 5 include resins such as a cycloolefiin resin obtained from a cycloolefin such as norbornene, dicyclopentadiene, or tetracyclododecene, a silicone resin, a polycarbonate resin, an epoxy resin, an acrylic resin such as polymethyl methacrylate or polybutyl methacrylate, a phenolic resin, a polyimide resin, a benzoxazine resin, an oxetane resin, and a polyester resin such as a polyethylene terephthalate resin or a polybutylene terephthalate resin. Among these, more preferable examples thereof include a polycarbonate resin, an acrylic resin, and a polyester resin in view of providing more excellent transparency and suitably satisfying the above-described haze and yellow index, and still more preferable examples thereof include an acrylic resin in view of the heat-fusion property.

Lamination of the resin film layer 5 and the primer layer 2 is carried out by applying a binder resin constituting the primer layer 2 onto the resin film layer 5 or sticking the resin film layer 5 onto a surface on which a binder resin constituting the primer layer 2 has been applied, and curing the binder resin.

The thickness of the resin film layer 5 may be typically 25 to 200 µm, preferably 40 to 125 µm, more preferably 50 to 100 µm.

### Usage of organic glass laminate

Usage of the organic glass laminate of the present invention is not particularly limited, and the organic glass laminate of the present invention may be used for a window in a vehicle such as an automobile a railroad car, or the like; for a roof of a carport, a terrace, or the like; or for the like purpose. The organic glass laminate of the present invention has excellent scratch resistance, abrasion resistance, and a transparency maintaining function, so that the organic glass laminate of the present invention can sufficiently satisfy the performance that is required in the abovementioned usage.

### Method for producing organic glass laminate

A method for producing the organic glass laminate of the present invention is not particularly limited, and may be, for example, a method of preparing a laminating sheet in which the layers other than the organic glass base substrate have been laminated in advance (which may hereafter be denoted as a laminating sheet for use in organic glass) and laminating the layers onto the organic glass base substrate by using the laminating sheet for use in organic glass.

Specifically, the organic glass laminate of the present invention can be produced by a method of laminating a laminating sheet for use in organic glass, that is obtained by laminating at least a hard-coat layer 3 and a primer layer 2 in this order on a releasable support film layer 6 (which may hereafter be denoted as a transfer sheet), onto an organic glass base substrate 1 and thereafter releasing the support film layer 6 (which may hereafter be denoted as a transfer method). Alternatively, the organic glass laminate of the present invention can be produced by a method of laminating and integrating a laminating sheet for use in organic glass, that is obtained by laminating at least a primer layer 2 and a hard-coat layer 3 in this order on the resin film layer 5 (which may hereafter be denoted as a laminating sheet) itself, onto an organic glass base substrate 1.

More specifically, in the case of using a transfer sheet, there can be mentioned (A) a method of sticking the transfer sheet onto an organic glass base substrate that has been molded in advance, and thereafter releasing the support film layer 6; (B) a method of integrating an organic glass resin with the transfer sheet at the time of injection molding of the organic glass resin, and thereafter releasing the support film layer 6; and (C) a method of sticking the transfer sheet onto an organic glass base substrate having a plate shape, then releasing the support film to form an organic glass laminate having a plate shape, and thereafter molding the organic glass laminate by performing a bending process or the like on the organic glass laminate in accordance with the needs.

Also, more specifically, in the case of using a laminating sheet, there can be mentioned (D) a method of sticking a polycarbonate laminating sheet onto an organic glass base substrate that has been molded in advance; (E) a method of integrating an organic glass resin with the laminating sheet at the time of injection molding of the organic glass resin; and (F) a method of sticking the laminating sheet onto an organic glass base substrate having a plate shape, and thereafter molding the organic glass laminate by performing a bending process or the like on the organic glass laminate in accordance with the needs.

It is sufficient that the laminating sheet for use in organic glass has a lamination structure capable of laminating at least the primer layer 2 and the hard-coat layer 3 in this order on the organic glass base substrate 1. In the case in which the laminating sheet for use in organic glass is laminated on the organic glass base substrate 1 by being stuck onto the organic glass base substrate I, it is preferable that an adhesive layer 4 is disposed on a surface side thereof that is brought into contact with the organic glass base substrate 1 in order to impart a property of adhesiveness onto the organic glass base substrate 1. Also, in the case in which the laminating sheet for use in organic glass is used by being integrated with the organic glass base substrate 1 at the time of injection molding of the organic glass base substrate 1, it is preferable that an adhesive layer 4 or a resin film layer 5 is disposed on a surface side thereof that is brought into contact with the organic glass base substrate 1.

More specifically, in the case of using the laminating sheet for use in organic glass as a transfer sheet, it is sufficient that the laminating sheet for use in organic glass has a structure in which at least the hard-coat layer 3 and the primer layer 2 are laminated in this order on the releasable support film layer 6.

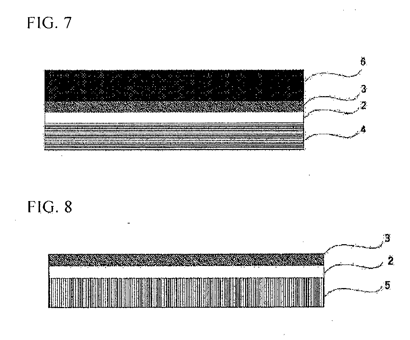

Referring to Fig. 7, a suitable example of the transfer sheet is a lamination structure in which at least the hard-coat layer 3, the primer layer 2, and the adhesive layer 4 are laminated in this order on the support film layer 6. The laminating sheet having such a lamination structure can be used either by being integrated with the organic glass base substrate 1 at the time of injection molding of the organic glass base substrate 1 or by being stuck onto the organic glass base substrate 1; however, the laminating sheet is particularly suitably used by being integrated with the organic glass base substrate 1 at the time of injection molding of the organic glass base substrate 1.

Also, another suitable example of the transfer sheet is a lamination structure in which at least the hard-coat layer 3, the primer layer 2, and the resin film layer 5 are laminated in this order on the support film layer 6. The laminating sheet having such a lamination structure is particularly suitably used by being integrated with the organic glass base substrate 1 at the time of injection molding of the organic glass base substrate 1.

The resin constituting the support film layer 6 is not particularly limited as long as the support film layer 6 can be released from the hard-coat layer 3, and examples thereof that are put to use include a polyolefin-based resin such as polyethylene or polypropylene; a vinyl-based resin such as polyvinyl chloride, polyvinylidene chloride, polyvinyl alcohol, an ethylene·vinyl acetate copolymer, or an ethylene·vinyl alcohol copolymer; a polyester-based resin such as polyethylene terephthalate, polybutylene terephthalate, or polyethylene naphthalate; an acryl-based resin such as a polymethyl (meth)acrylate or a polyethyl (meth)acrylate; a styrene-based resin such as polystyrene, an acrylonitrile·butadiene·styrene copolymer, cellulose triacetate, cellophane, polycarbonate, and an elastomer-based resin such as polyurethane. Among these resins, a polyester-based resin can be mentioned as a preferable example, and polyethylene terephthalate can be mentioned as a more preferable example, because of having good moldability and releasability.

The support film layer 6 may be made of a single layer formed by using a single resin, or may be made of plural layers formed by using the same kind of resin or different kinds of resins. Also, the support film layer 6 may be subjected to any coating or treatment for adjusting the release strength.

The thickness of the support film layer 6 is not particularly limited; however, the thickness may be typically 20 to 200 µm, preferably 30 to 100 µm, more preferably 40 to 80 µm.

Also, in the case of using the laminating sheet for use in organic glass as a laminating sheet, it is sufficient that the laminating sheet for use in organic glass has a structure in which at least the primer layer 2 and the hard-coat layer 3 are laminated in this order on the resin film layer 5.

Referring to Fig. 8, a suitable example of the laminating sheet is a lamination structure in which at least the resin film layer 5, the primer layer 2, and the hard-coat layer 3 are laminated in this order. The laminating sheet having such a lamination structure is particularly suitably used by being integrated with the organic glass base substrate 1 at the time of injection molding of the organic glass base substrate 1.

Also, another suitable example of the laminating sheet is a lamination structure in which at least the adhesive layer 4, the resin film layer 5, the primer layer 2, and the hard-coat layer 3 are laminated in this order. The laminating sheet having such a lamination structure can be used either by being integrated with the organic glass base substrate 1 at the time of injection molding of the organic glass base substrate 1 or by being stuck onto the organic glass base substrate 1; however, the laminating sheet is particularly suitably used by being stuck onto the organic glass base substrate 1.

The laminating sheet for use in organic glass is prepared by laminating the layers other than the organic glass base substrate according to the above-described method. Specifically, in the case of the transfer sheet, the laminating sheet for use in organic glass can be prepared by preparing a support film layer 6 and laminating a hard-coat layer 3 and a primer layer 2 as well as an adhesive layer 4 and a resin film layer 5, which are provided in accordance with the needs, in a predetermined order on the support film layer 6. Also, in the case of the laminating sheet, the laminating sheet for use in organic glass can be prepared by preparing a resin film layer 5 and laminating a primer layer 2 and a hard-coat layer 3 as well as an adhesive layer 4, which is provided in accordance with the needs, in a predetermined order on the resin film layer 5.

A method for producing an organic glass laminate of the present invention by sticking a laminating sheet for use in organic glass onto an organic glass base substrate that has been molded in advance may be, for example, a method of molding the organic glass base substrate by extrusion molding or the like, and immediately thereafter or after cooling, press-bonding and laminating the back surface of the laminating sheet for use in organic glass onto the organic glass base substrate 1 with use of a roll or the like. Also, in the case in which the laminating sheet for use in organic glass is a transfer sheet, the transfer sheet may be stuck onto the organic glass base substrate 1, and thereafter the support film layer 6 may be released and removed. Furthermore, after the laminating sheet for use in organic glass is stuck onto the organic glass base substrate that has been molded in advance as described above, this may be further molded into a desired shape.

Also, a method for producing the organic glass laminate of the present invention by integrating a laminating sheet for use in organic glass with an organic glass resin at the time of injection molding of the organic glass resin may be, for example, a method of performing injection molding of the organic glass resin to the laminating sheet for use in organic glass in the injection molding method such as the insert molding method, the thermoject molding method (simultaneous injection molding with lamination in which a hot vacuum molding step and an injection molding step are integrated), or the in-mold molding method. Also, in the case in which the laminating sheet for use in organic glass is a transfer sheet, injection molding of the organic glass resin may be carried out to the transfer sheet, and the support film layer 6 may be released and removed simultaneously with or after separating the mold.

More specifically, in the case of producing the organic glass laminate of the present invention by using the insert molding method, the following steps 1 to III may be carried out.
Step 1: The laminating sheet for use in organic glass is molded into a three-dimensional shape in advance with use of a vacuum-molding mold.
Step II: Step of obtaining a molded sheet by trimming an extraneous part of the laminating sheet for use in organic glass subjected to vacuum molding, and
Step III: The laminating sheet for use in organic glass molded in Step II is inserted into an injection-molding mold (side opposite to the polycarbonate resin where the hard-coat layer 3 is injected); the injection-molding mold is closed; and the organic glass resin in a fluidized state is injected into the mold to integrate the organic glass base substrate 1 with the polycarbonate laminating sheet.

Also, in the case of producing the organic glass laminate of the present invention by using the thermoject molding method, the following steps 1 to 3 may be carried out.

Step I: The laminating sheet for use in organic glass is supplied and fixed between a pair of male and female molds in a mold-open state so that the hard-coat layer surface of the laminating sheet for use in organic glass faces towards the cavity side. Further, the polycarbonate laminating sheet is preliminarily molded by heating and softening the layer of the polycarbonate laminating sheet on the side opposite to the hard-coat layer 3, performing vacuum suction from the mold side that faces the hard-coat layer side, and allowing the softened laminating sheet for use in organic glass to adhere closely along the shape of the movable mold.
Step 2: After the two molds are clamped, the organic glass resin in a fluidized state is injected into the cavity formed by the two molds so that the organic glass resin fills the cavity and is solidified, so as to laminate and integrate the formed organic glass base substrate and the laminating sheet for use in organic glass.
Step 3: The movable mold is separated from the fixed mold, and the organic glass laminate in which the organic glass base substrate and the polycarbonate laminating sheet have been integrated is taken out.

Also, in the method of producing the organic glass laminate of the present invention by sticking the laminating sheet for use in organic glass onto the organic glass base substrate 1 having a plate shape, the laminating sheet for use in organic glass may be stuck either without cooling or after cooling when the organic glass base substrate I having a plate shape is molded. Also, in the case in which the laminating sheet for use in organic glass is a transfer sheet, the organic glass base substrate 1 having a plate shape may be stuck onto the transfer sheet, and thereafter the support film layer 6 may be released and removed. Further, after the laminating sheet for use in organic glass is stuck onto the organic glass base substrate 1, a bending process or the like may be carried out on the organic glass laminate in accordance with the needs, so as to process the organic glass laminate into a desired shape.

### 2. Laminating sheet for use in organic glass

Also, the present invention provides a laminating sheet for use in organic glass for producing the organic glass laminate, wherein the laminating sheet for use in organic glass has at least the primer layer 2 and the hard-coat layer 3. In the laminating sheet for use in organic glass, the composition and the thickness of the primer layer 2 and the hard-coat layer 3 are as described above. Also, in the laminating sheet for use in organic glass, the layers disposed in accordance with the needs in addition to the primer layer 2 and the hard-coat layer 3, as well as the composition, the thickness, and the like thereof, are as described above.

### 3. Organic glass laminate (2)

Also, the present invention provides an organic glass laminate having at least an organic glass base substrate, a primer layer, and a hard-coat layer in this order, wherein the hard-coat layer is formed of a cured product of a resin composition containing an ionizing-radiation-curable resin and an ultraviolet absorbent; the ultraviolet absorbent is contained at 0.5 to 10 parts by mass per a total of 100 parts by mass of the ionizing-radiation-curable resin; and the ionizing-radiation-curable resin contains (i) a tri- or more functional ionizing-radiation-curable resin and (ii) a bifunctional (meth)acrylate monomer in which two (meth)acryloyl groups are bonded via an aliphatic linker region. The organic glass laminate can be provided with excellent scratch resistance, abrasion resistance, water-resistant adhesion, transparency, and weather resistance.

In the organic glass laminate, the scratch resistance, abrasion resistance, water-resistant adhesion, transparency, and weather resistance can be improved by adopting a hard-coat layer having a specific composition, so that the initial value as well as the values before and after a predetermined accelerated weathering test, of the pencil hardness, the haze, and the yellow index are not particularly limited; however, it is preferable that the above-described ranges are satisfied.

In the organic glass laminate, the kind, the thickness, and the like of the organic glass base substrate are as described above.

Also, in the organic glass laminate, the kind of the components constituting the primer layer, the kind of any additives that can be blended in the primer layer, the thickness of the primer layer, and the like are as described above.

Also, in the organic glass laminate, the kind of the ionizing-radiation-curable resin used in the hard-coat layer, the kind and preferable examples of the (i) tri- or more functional ionizing-radiation-curable resin, the kind and preferable examples of the (ii) bifunctional (meth)acrylate monomer, the ratio and the content of these, the kind and the content of the ultraviolet absorbent used in the hard-coat layer, the thickness of the hard-coat layer, the kind of any additives that can be blended in the hard-coat layer, and the like are also as described above.

Further, in the organic glass laminate, any other disposed layers (resin film layer, adhesive layer) and the like are also as described above.

The usage of the organic glass laminate, the production method, the organic glass laminate used for production, and the like are also as described above.

### EXAMPLES

Hereafter, the present invention will be described in detail by showing Examples and Comparative Examples. However, the present invention is not limited to Examples.

### [Production of polycarbonate laminate]

### Example 1

A resin composition obtained by adding 16 parts by mass of an alicyclic urethane diacrylate having two hydroxyethyl acrylates bonded to isophorone diisocyanate by urethane bonding and 2.3 parts by mass (2.0 parts by mass relative to a total of 100 parts by mass of an ionizing-radiation-curable resin) of a hydroxyphenyltriazine-based ultraviolet absorbent ("Tinuvin479" manufactured by BASF Japan Co., Ltd.) to 100 parts by mass of a hexafunctional ionizing-radiation-curable resin (mixture of 60 parts by mass of a hexafunctional urethane acrylate (having a molecular weight of about 1,000) and 40 parts by mass of a bifunctional caprolactone-modified urethane acrylate (having a molecular weight of about several thousands)) was applied onto a support film layer (having a thickness of 75 µm) made of polyethylene terephthalate to a thickness of 3 µm, followed by curing with electron beam radiation at 10 Mrad to laminate a hard-coat layer on the support film layer. Subsequently, a corona discharge treatment was carried out on the hard-coat layer surface, and thereafter a primer layer forming resin composition 1 having the following composition was applied thereon by the gravure reverse method to form a primer layer having a thickness of 3 µm. Further, a heat-fusion resin (acrylic resin) was applied on the primer layer by the gravure reverse method to form an adhesive layer having a thickness of 4 µm. Thus, a polycarbonate laminating sheet having the hard-coat layer, the primer layer, and the adhesive layer laminated sequentially on the support film layer was obtained.

### (Primer layer forming resin composition I)

- Polycarbonate-based urethane acrylic copolymer*¹: 100 parts by mass
- Hydroxyphenyltriazine-based ultraviolet absorbent*²: 17 parts by mass
- Hydroxyphenyltriazine-based ultraviolet absorbent*³: 13 parts by mass
- hindered amine-based light stabilizer*⁴: 8 parts by mass
- Antiblocking agent*⁵: 9 parts by mass
- Curing agent (hexamethylene diisocyanate): 25 parts by mass
   *1, The mass ratio of the urethane component to the acrylic component in the polycarbonate-based urethane acrylic copolymer is 70/30.
   *2, Tinuvin400 (trade name), 2-[4-[(2-hydroxy-3-dodecyloxypropyl)oxy]-2-hydroxyphenyl]-4,6-bis(2,4-dimethylphe nyl)-1,3,5-triazine, manufactured by BASF Japan Co., Ltd.
   *3, Tinuvin479 (trade name), 2-(2-hydroxy-4-[1-octyloxycarbonylethoxy]phenyl)-4,6-bis(4-phenylphenyl)-1,3,5-triaz ine, manufactured by BASF Japan Co., Ltd.
   *4, Tinuvin123 (trade name), bis(1-octyloxy-2,2,6,6-tetramethyl-4-piperidyl) sebacate), manufactured by BASF Japan Co., Ltd.
   *5, Silica particles, average particle size: 3 µm

By using the polycarbonate laminating sheet thus obtained and a polycarbonate resin (manufactured by Teijin Limited, Panlite L-1250Z, MVR of 8 cm³/10 min), thermoject molding was carried out under the following conditions, thereby to laminate the adhesive layer of the polycarbonate laminating sheet and the polycarbonate base substrate having a flat plate shape and having a thickness of 3 mm. Thereafter, the support film layer was released and then removed, so as to obtain a polycarbonate laminate having the polycarbonate base substrate, the adhesive layer, the primer layer, and the hard-coat layer laminated in this order.

### (Conditions for thermoject molding)

The polycarbonate laminating sheet was supplied and fixed between a pair of male and female molds (a movable mold and a fixed mold) in a mold-open state so that the support film surface would face towards the cavity side. Thereafter, the polycarbonate laminating sheet was preliminarily molded by heating to 100°C and softening the adhesive layer of the polycarbonate laminating sheet, performing vacuum suction from the mold side that faced the hard-coat layer side, and allowing the softened polycarbonate laminating sheet to adhere closely along the shape of the movable mold. Subsequently, after the two molds were clamped, the polycarbonate resin in a fluidized state was injected into the cavity formed by the two molds at a molding temperature of 315°C and under a pressure of 170 MPa so that the polycarbonate resin would fill the cavity and be solidified, thereby to laminate and integrate the formed polycarbonate base substrate and the polycarbonate laminating sheet. Subsequently, after the movable mold was separated from the fixed mold, the support film was released, and the polycarbonate laminate in which the polycarbonate base substrate and the polycarbonate laminating sheet had been integrated was taken out.

### Example 2

A polycarbonate laminate having a polycarbonate base substrate, an adhesive layer, a primer layer, and a hard-coat layer laminated in this order was produced under the same conditions as in Example 1 except that the hard-coat layer having a thickness of 3 µm was formed by using a resin composition obtained by adding 16 parts by mass of a tricyclodecanedimethanol diacrylate ("NKESTER A-DCP" manufactured by Shin-Nakamura Co., Ltd.) and 2.3 parts by mass (2.0 parts by mass relative to a total of 100 parts by mass of an ionizing-radiation-curable resin) of a hydroxyphenyltriazine-based ultraviolet absorbent ("Tinuvin479" manufactured by BASF Japan Co., Ltd.) to 100 parts by mass of a hexafunctional ionizing-radiation-curable resin (mixture of 60 parts by mass of a hexafunctional urethane acrylate (having a molecular weight of about 1,000) and 40 parts by mass of a bifunctional caprolactone-modified urethane acrylate (having a molecular weight of about several thousands)).

### Example 3

A polycarbonate laminate having a polycarbonate base substrate, an adhesive layer, a primer layer, and a hard-coat layer laminated in this order was produced under the same conditions as in Example 1 except that the hard-coat layer having a thickness of 3 µm was formed by using a resin composition obtained by adding 16 parts by mass of an alicyclic urethane diacrylate having two hydroxyethyl acrylates bonded to isophorone diisocyanate by urethane bonding and 3.8 parts by mass (3.3 parts by mass relative to a total of 100 parts by mass of an ionizing-radiation-curable resin) of a hydroxyphenyltriazine-based ultraviolet absorbent ("Tinuvin479" manufactured by BASF Japan Co., Ltd.) to 100 parts by mass of a hexafunctional ionizing-radiation-curable resin (mixture of 60 parts by mass of a hexafunctional urethane acrylate (having a molecular weight of about 1,000) and 40 parts by mass of a bifunctional caprolactone-modified urethane acrylate (having a molecular weight of about several thousands)).

### Example 4

A primer layer having a thickness of 1.5 µm was formed by applying a primer layer forming resin composition 2 having the following composition onto a resin film layer made of an acrylic film (having a thickness of 125 µm, containing 1 part by mass of a hydroxyphenyltriazine-based ultraviolet absorbent relative to 100 parts by mass of the resin component) by the gravure reverse method. Subsequently, a resin composition obtained by adding 16 parts by mass of an alicyclic urethane diacrylate having two hydroxyethyl acrylates bonded to isophorone diisocyanate by urethane bonding and 2.3 parts by mass (2.0 parts by mass relative to a total of 100 parts by mass of an ionizing-radiation-curable resin) of a hydroxyphenyltriazine-based ultraviolet absorbent ("Tinuvin479" manufactured by BASF Japan Co., Ltd.) to 100 parts by mass of a hexafunctional ionizing-radiation-curable resin (mixture of 60 parts by mass of a hexafunctional urethane acrylate (having a molecular weight of about 1,000) and 40 parts by mass of a bifunctional caprolactone-modified urethane acrylate (having a molecular weight of about several thousands)) was applied to a thickness of 3 µm onto the primer layer, followed by curing with electron beam radiation at 10 Mrad to obtain a polycarbonate laminating sheet having the resin film layer, the primer layer, and the hard-coat layer sequentially laminated.

### (Primer layer forming resin composition 2)

- 80 parts by mass of an acrylic polymer polyol
- 20 parts by mass of a urethane resin
- 10 parts by mass of hexamethylene diisocyanate
- 3.0 parts by mass of a hydroxyphenyltriazine-based ultraviolet absorbent ("Tinuvin479" manufactured by BASF Japan Co., Ltd.)
- 1.8 parts by mass of a hindered amine-based light stabilizer

By using the polycarbonate laminating sheet thus obtained and a polycarbonate resin (manufactured by Teijin Limited, Panlite L-1250Z, MVR of 8 cm³/10 min), thermoject molding was carried out under the same conditions as in Example 1, thereby to laminate the adhesive layer of the polycarbonate laminating sheet and the polycarbonate base substrate having a flat plate shape and having a thickness of 3 mm. Thus, a polycarbonate laminate having the polycarbonate base substrate, the resin film layer, the primer layer, and the hard-coat layer laminated in this order was obtained.

### Example 5

A polycarbonate laminate having a polycarbonate base substrate, an adhesive layer, a primer layer, and a hard-coat layer laminated in this order was produced under the same conditions as in Example 1 except that the hard-coat layer having a thickness of 3 µm was formed by using a resin composition obtained by adding 0.7 parts by mass of a hydroxyphenyltriazine-based ultraviolet absorbent ("Tinuvin479" manufactured by BASF Japan Co., Ltd.) to 100 parts by mass of a hexafunctional ionizing-radiation-curable resin (mixture of 60 parts by mass of a hexafunctional urethane acrylate (having a molecular weight of about 1,000) and 40 parts by mass of a bifunctional) caprolactone-modified urethane acrylate (having a molecular weight of about several thousands)).

### Example 6

A polycarbonate laminate having a polycarbonate base substrate, an adhesive layer, a primer layer, and a hard-coat layer laminated in this order was produced under the same conditions as in Example 1 except that the hard-coat layer having a thickness of 3 µm was formed by using a resin composition obtained by adding 0.7 parts by mass of a hydroxyphenyltriazine-based ultraviolet absorbent ("Tinuvin479" manufactured by BASF Japan Co., Ltd.) to 100 parts by mass of a polyfunctional (polyfunctional + bifunctional) ionizing-radiation-curable resin shown below.

### (Polyfunctional (tetra- to octafunctional + bifunctional) ionizing-radiation-curable resin)

- 80 parts by mass of a polyfunctional acrylate having an isocyanurate ring (having a weight-average molecular weight of about 27,000: containing a tetra- to octafunctional acrylate polymer as a major component)
- 20 parts by mass of a bifunctional urethane acrylate monomer (having a molecular weight of about 400) in which two (meth)acryloyl groups are bonded via an aliphatic chain having a urethane bond

The bifunctional urethane acrylate monomer is a monomer in which one molecule of a compound represented by the following formula (X) and two molecules of a compound represented by the following formula (Y) are bonded, where the isocyanate group of the compound represented by the following formula (X) and the hydroxyl group of the compound represented by the following formula (Y) react with each other to form the urethane bond.

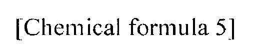

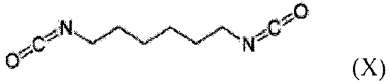

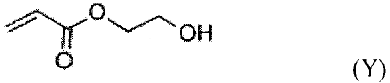

### Example 7

A polycarbonate laminate having a polycarbonate base substrate, an adhesive layer, a primer layer, and a hard-coat layer laminated in this order was produced under the same conditions as in Example 6 except that the amount of addition of the hydroxyphenyltriazine-based ultraviolet absorbent ("Tinuvin479" manufactured by BASF Japan Co., Ltd.) was changed to 1.4 parts by mass relative to 100 parts by mass of the ionizing-radiation-curable resin.

### Example 8

A polycarbonate laminate having a polycarbonate base substrate, an adhesive layer, a primer layer, and a hard-coat layer laminated in this order was produced under the same conditions as in Example 6 except that the amount of addition of the hydroxyphenyltriazine-based ultraviolet absorbent ("Tinuvin479" manufactured by BASF Japan Co., Ltd.) was changed to 2.0 parts by mass relative to 100 parts by mass of the ionizing-radiation-curable resin.

### Comparative Example I

A polycarbonate laminate having a polycarbonate base substrate, an adhesive layer, a primer layer, and a hard-coat layer laminated in this order was produced under the same conditions as in Example 1 except that the hard-coat layer having a thickness of 3 µm was formed by using a resin composition obtained by adding 2.0 parts by mass of a hydroxyphenyltriazine-based ultraviolet absorbent ("Tinuvin479" manufactured by BASF Japan Co., Ltd.) to 100 parts by mass of a hexafunctional ionizing-radiation-curable resin (mixture of 60 parts by mass of a hexafunctional urethane acrylate (having a molecular weight of about 1,000) and 40 parts by mass of a bifunctional) caprolactone-modified urethane acrylate (having a molecular weight of about several thousands)).

### Comparative Example 2

A polycarbonate laminate having a polycarbonate base substrate, an adhesive layer, a primer layer, and a hard-coat layer laminated in this order was produced under the same conditions as in Example 1 except that the hard-coat layer having a thickness of 3 µm was formed by using a resin composition obtained by adding 16 parts by mass of an alicyclic urethane diacrylate having two hydroxyethyl acrylates bonded to isophorone diisocyanate by urethane bonding and 14 parts by mass (12 parts by mass relative to a total of 100 parts by mass of an ionizing-radiation-curable resin) of a hydroxyphenyltriazine-based ultraviolet absorbent ("Tinuvin479" manufactured by BASF Japan Co., Ltd.) to 100 parts by mass of a hexafunctional ionizing-radiation-curable resin (mixture of 60 parts by mass of a hexafunctional urethane acrylate (having a molecular weight of about 1,000) and 40 parts by mass of a bifunctional caprolactone-modified urethane acrylate (having a molecular weight of about several thousands)).

### Comparative Example 3

A polycarbonate laminate having a polycarbonate base substrate, a resin film layer, a primer layer, and a hard-coat layer laminated in this order was produced under the same conditions as in Example 4 except that the hard-coat layer having a thickness of 3 µm was formed on the primer layer by using a resin composition obtained by adding 16 parts by mass of an alicyclic urethane diacrylate having two hydroxyethyl acrylates bonded to isophorone diisocyanate by urethane bonding and 2.3 parts by mass (2.0 parts by mass relative to a total of 100 parts by mass of an ionizing-radiation-curable resin) of a hydroxyphenyltriazine-based ultraviolet absorbent ("Tinuvin479" manufactured by BASF Japan Co., Ltd.) to 100 parts by mass of a polyfunctional (meth)acrylate having an acrylic group equivalent of 250.

### Comparative Example 4

A polycarbonate laminate having a polycarbonate base substrate, an adhesive layer, a primer layer, and a hard-coat layer laminated in this order was produced under the same conditions as in Example 1 except that the hard-coat layer having a thickness of 3 µm was formed by using a resin composition obtained by adding 0.4 parts by mass of a hydroxyphenyltriazine-based ultraviolet absorbent ("Tinuvin479" manufactured by BASF Japan Co., Ltd.) to 100 parts by mass of a hexafunctional ionizing-radiation-curable resin (mixture of 60 parts by mass of a hexafunctional urethane acrylate (having a molecular weight of about 1,000) and 40 parts by mass of a bifunctional caprolactone-modified urethane acrylate (having a molecular weight of about several thousands)).

### Comparative Example 5

A polycarbonate base substrate of 3 mm having a flat plate shape was fabricated by injection molding at a molding temperature of 315°C and under a pressure of 170 MPa using a polycarbonate resin (manufactured by Teijin Limited, Panlite L-1250Z. MVR of 8 cm³/10 min).

A primer layer forming material SHP470 (manufactured by Momentive Performance Materials Inc.) was applied by the spin coating method on the fabricated polycarbonate base substrate, and the resultant product was dried in a hot-air circulating oven of 120°C for 20 minutes. The thickness of the formed primer layer was 1 µm. Subsequently, a hard-coat layer forming material AS4700 (manufactured by Momentive Performance Materials Inc.) containing an ultraviolet absorbent and having polysiloxane as a base agent was applied by the spin coating method, and the resultant product was left to stand quietly in a hot-air circulating oven of 120°C for 60 minutes, thereby to remove the solvent and to perform a curing-acceleration treatment. The thickness of the formed hard-coat layer was 5 µm.

### [Performance evaluation of polycarbonate laminate]

### (Pencil hardness)

The pencil hardness was set to be a hardness of a pencil when scratches were obtained none or once under conditions using a pencil scratch applied-film hardness tester (manufactured by Toyo Seiki Seisaku-sho, Ltd., type NP) in which the applied load on the tip end of the pencil was set to be 1 kg, and the pencil was allowed to travel 5 times for a distance of 10 mm at a speed of 0.5 mm/sec. Also, for the measurement of the pencil hardness, a pencil was used which had been prepared by cutting only the wooden part of the pencil so that the core would come to have a cylindrical shape, exposing the core for 5 to 6 mm, and flattening the tip end with an abrasive paper, and the angle of the pencil was set to be 45°.

### (Scratch resistance)

The polycarbonate laminate was scrubbed back and forth for 10 times with an applied load of 300 g/cm² using a steel wool ("Bonstar #0000 (trade name)", manufactured by Nihon Steel Wool Co., Ltd.). Thereafter, the polycarbonate laminate was observed, and the degree of the scratches on the surface of the hard-coat layer was evaluated according to the following determination standard.
AA: No scratches are recognized at all.
A: Scratches are present to such an extent that the scratches are not seen when observation is not carried out.
B: Scratches are recognized clearly; however the whitening is not generated.
C: Scratches are present to such an extent that the whitening is recognized.

### (Abrasion resistance)

A Taber abrasion test was carried out by using CS-10F as an abrasion wheel under conditions with 500 rotations, 60 rpm, and 500 g load. The haze was measured at four sites of each polycarbonate laminate before and after the Taber abrasion test by using a haze meter (NDH-2000 manufactured by Nippon Denshoku Industries Co., Ltd.) according to the method described in JIS K7136, and an average value thereof was determined. The haze difference (ΔH) before and after the Taber abrasion test was determined by subtracting the haze obtained before the Taber abrasion test from the haze obtained after the Taber abrasion test.

### (Water-resistant adhesion)

Each polycarbonate laminate was immersed in a warm water of 40°C for 500 hours. Thereafter, a checkerboard-pattern tape peeling test was carried out on the surface of the hard-coat layer of the polycarbonate laminate according to JIS K5400 by setting the cutting depth to be 1 mm and using a cellophane tape (CT405AP-24) manufactured by Nichiban Co., Ltd. The presence or absence of the peeling-off of the hard-coat layer from the polycarbonate laminate was observed, and the water-resistant adhesion was evaluated according to the following determination standard. A: Peeling-off of the hard-coat layer is not recognized at all.

B: Peeling-off of the hard-coat layer is recognized even to a partial extent.

### (Weather resistance)

With respect to each polycarbonate laminate immediately after preparation, by using an accelerated weathering tester (SUV-W23, manufactured by Iwasaki Electric Co., Ltd.), a total sum of 50 cycles were carried out, with one cycle being under the conditions of (1) ultraviolet ray being radiated at 60 mW/cm², 63°C, and 50 RH% for 20 hours, (2) in darkness at 30°C and 98 RH% for 4 hours, and (3) water being sprayed for 30 seconds before and after the condition (2).

The outer appearance of each polycarbonate laminate was observed after the accelerated weathering test, and change in the outer appearance was evaluated according to the following determination standard.
A: Change in outer appearance such as cracks or peeling-off is not recognized.
B (crack): Cracks are seen on the surface.
B (peeling-off): Peeling-off of the hard-coat layer is seen.

Also, the cross-section of each polycarbonate laminate was observed with a scanning electron microscope (SEM) before and after the accelerated weathering test, so as to measure the thickness of the hard-coat layer. By assuming the thickness of the hard-coat layer before the accelerated weathering test to be 100%, the ratio (%) of the thickness of the hard-coat layer after the accelerated weathering test (hereafter referred to as a film thickness ratio after the weathering test) was calculated, and the film decrease of the hard-coat layer was evaluated according to the following determination standard.
A: The film thickness ratio after the weathering test is 75% or more.
B: The film thickness ratio after the weathering test is 50% or more and less than 75%.
C: The film thickness ratio after the weathering test is less than 50%.

Further, the yellow index (YI) of each polycarbonate laminate was measured before and after the accelerated weathering test, and the difference of the yellow index (ΔYI) was determined by subtracting the yellow index obtained before the accelerated weathering test from the yellow index obtained after the accelerated weathering test. Here, the yellow index was measured by using a spectrophotometer (UV-2550. manufactured by Shimadzu Corporation) and performing measurement in a transmission mode with a C light source and a viewing angle set to be 2° according to the "Method for testing the yellowness degree and the yellowing degree of plastics" of JIS K 7103.

Also, the haze of each polycarbonate laminate was measured before and after the accelerated weathering test, and the difference of the haze (ΔH) was determined by subtracting the haze obtained before the accelerated weathering test from the haze obtained after the accelerated weathering test. Here, in the measurement of the haze, the haze was determined by using a haze meter (NDH-2000 manufactured by Nippon Denshoku Industries Co., Ltd.) and performing measurement according to the method described in JIS K7136.

### (Hot water resistance)

A checkerboard-pattern tape peeling test was carried out on the surface of the hard-coat layer of each polycarbonate laminate according to JIS K5400 by making a cut in a checkerboard pattern with the cutting depth set to be 1 mm and using a cellophane tape (CT405AP-24) manufactured by Nichiban Co., Ltd. The presence or absence of the peeling-off of the hard-coat layer from the polycarbonate laminate was observed, and the hot water resistance was evaluated according to the following determination standard.
A: Peeling-off of the hard-coat layer is not recognized at all.
B: Peeling-off of the hard-coat layer is recognized even to a partial extent.
C: Peeling-off is recognized even before the tape peeling test.

The obtained results are shown in Table 1. In the case in which the content of the ultraviolet absorbent is lower than 0.5 parts by mass per a total of 100 parts by mass of the ionizing-radiation-curable resin (Comparative Example 4), the ΔH before and after the accelerated weathering test exceeds 20, thereby failing to suppress discoloration. Meanwhile, in the case in which the content of the ultraviolet absorbent exceeds 10 parts by mass per a total of 100 parts by mass of the ionizing-radiation-curable resin (Comparative Example 2), the ΔH before and after the accelerated weathering test exceeds 20, so that the weather resistance is further insufficient, thereby suggesting that the bleed-out of the ultraviolet absorbent or the embrittlement of the hard-coat layer occurred. Also, when the ΔH before and after the accelerated weathering test exceeds 20% (Comparative Example 1), a sufficient weather resistance could not be provided, and generation of cracks and film decrease of the hard-coat layer were recognized after the accelerated weathering test. Furthermore, when the ΔH before and after the accelerated weathering test exceeds 20 or the pencil hardness exceeds 2H even though the content of the ultraviolet absorbent is 0.5 to 10 parts by mass per a total of 100 parts by mass of the ionizing-radiation-curable resin, neither the generation of cracks nor the film decrease of the hard-coat layer after the accelerated weathering test could be suppressed. Also, when the hard-coat layer exceeds 2H, the ΔH before and after the accelerated weathering test exceeds 20%, so that the transparency could not be maintained, and moreover, the generation of cracks after the accelerated weathering test was recognized.

In contrast, it has been made clear that the polycarbonate laminate has good scratch resistance, abrasion resistance, water-resistant adhesion, and weather resistance while having excellent transparency when all of the conditions (1) that the content of the ultraviolet absorbent is 0.5 to 10 parts by mass per a total of 100 parts by mass of the ionizing-radiation-curable resin, (2) that the pencil hardness is HB or more and 2H or less, (3) that the haze is 3% or less, and the ΔH before and after the accelerated weathering test is 20% or less, and (4) that the yellow index is 2 or less, and the ΔYI before and after the accelerated weathering test is 5 or less, are satisfied.

Further, it has also been made clear that the polycarbonate laminate can be provided with excellent scratch resistance, abrasion resistance, water-resistant adhesion, transparency, and weather resistance when the hard-coat layer contains (ii-1) a bifunctional (meth)acrylate monomer in which two (meth)acryloyl groups are bonded to one alicyclic ring or heterocyclic ring directly or via a linker region having a molecular weight of 200 or less or (ii-2) a bifunctional urethane (meth)acrylate monomer in which two (meth)acryloyl groups are bonded via an aliphatic chain having a urethane bond, together with (i) a tri- or more functional ionizing-radiation-curable resin.

**[Table 1]**

| | | Examples | | | | | | | | Comparative Examples | | | | |
|---|---|---|---|---|---|---|---|---|---|---|---|---|---|---|
| | | 1 | 2 | 3 | 4 | 5 | 6 | 7 | 8 | 1 | 2 | 3 | 4 | 5 |
| Composition of hard-coat layer (unit: parts by mass) | Hexafunctional ionizing-radiation-curable resin^{≠1} | 100 | 100 | 100 | 100 | 100 | - | - | - | 100 | 100 | - | 100 | - |
| | Polyfunctional ionizing-radiation-curable resin^{≠2} | - | - | - | - | - | - | - | - | - | - | 100 | - | - |
| | Bifunctional acrylate monomer^{≠3} | 16 | - | 16 | 16 | - | - | - | - | - | 16 | 16 | - | - |
| | Bifunctional acrylate monomer^{≠4} | - | 16 | - | - | - | - | - | - | - | - | - | - | - |
| | Polyfunctional (tetra- to octatunctional + bifunctional) ionizing-radiation-curable resin^{≠5} | - | - | - | - | - | 100 | 100 | 100 | - | - | - | - | - |
| | Hard-coat having polysiloxane as base agent | - | - | - | - | - | - | - | - | - | - | - | - | 100 |
| | Ultraviolet absorbent^{≠6} | 2.3 | 2.3 | 3.8 | 2.3 | 0.7 | 0.7 | 1.4 | 2.0 | 2.0 | 14 | 2.3 | 0.4 | 1.1 |
| Method of lamination of polycarbonate laminating sheet^{≠7} | | Transfer | Transfer | Transfer | Lamination | Transfer | Transfer | Transfer | Transfer | Transfer | Transfer | Lamination | Transfer | Coating |
| Pencil hardness | | HB | HB | HB | 2H | HB | HB | HB | HB | HB | HB | 3H | HB | HB |
| Haze (%) immediately after preparation | | 1.7 | 1.2 | 1.4 | 1.2 | 1.4 | 1.8 | 1.7 | 1.6 | 1.4 | 1.9 | 1.3 | 1.5 | 1.0 |
| Yellow index immediately after preparation | | 1.2 | 1.0 | 1.1 | 1.3 | 0.3 | 0.4 | 0.5 | 0.4 | 0.8 | 1.5 | 1.2 | 0.8 | 1.47 |
| ΔYI before and after accelerated weathering test | | 1.3 | 2.9 | 1.8 | 3.6 | 4.8 | 1.9 | 1 | 7.4 | 14.0 | 5.2 | 4.0 | 19.2 | 3.2 |
| ΔH (%) before and after accelerated weathering test | | 3.7 | 7.4 | 9.4 | 8.9 | 16.3 | 12.2 | 2.3 | 2.1 | 23.2 | 31.2 | 54.9 | 38.1 | 15.91 |
| Scratch resistance | | A | A | A | A | A | A | A | A | B | B | AA | B | C |
| Abrasion resistance (ΔH, %) | | 5.5 | 8.5 | 10.5 | 7.4 | 9.8 | 10.2 | 11.5 | 11.6 | 8.4 | 28.8 | 6.2 | 11.0 | 7.8 |
| Water-resistant adhesion | | A | A | A | A | A | A | A | A | B | B | A | A | A |
| Change in outer appearance after accelerated weathering test | | A | A | A | A | A | A | A | A | B (crack) B | B (peeling-off) | B (crack) | A | B (peeling-off) |
| Film decrease of hard-coat layer after accelerated weathering test | | A | A | A | A | A | A | A | A | C | - | A | B | - |
| Hot water resistance | | A | A | A | A | A | A | A | A | C | C | A | A | C |

| | | | | | | | | | | | | | | |
|---|---|---|---|---|---|---|---|---|---|---|---|---|---|---|
| #1 Mixture of 60 parts by mass of hexafunctional urethane acrylate (having a molecular weight of about 1,000) and 40 parts by mass of bifunctional caprolactone-modified urethane acrylate (having a molecular weight of about several thousands) #2 Polyfunctional (meth)acrylate having an acrylic group equivalent or 250 #3 Alicyclic urethane diacrylate having two hydroxyethyl acrylates bonded to isophorone diisocyanate by urethane bonding #4 Tricyclodecanedimethanol diacrylate #5 Ionizing-radiation-curable resin containing 80 parts by mass of polyfunctional (tetra- to octafunctional) acrylate (having a molecular weight of about 27,000) and 20 parts by mass of bifunctional urethane acrylate monomer (having a molecular weight of about 400) in which two (meth)acryloyl groups are bonded via an aliphatic chain having a urethane bond #6 Hydroxyphenyltriazine-based ultraviolet absorbent #7 In the "Transfer", by using a polycarbonate laminating sheet in which a support film layer, a hard-coat layer, a primer layer, and an adhesive layer are sequentially laminated, the adhesive layer, the primer layer, and the hard-coat layer were transferred onto a polycarbonate base substrate. In the "Lamination", by using a polycarbonate laminating sheet in which a resin film layer, a primer layer, and a hard-coat layer are sequentially laminated, the resin film layer, the primer layer, and the hard-coat layer were laminated onto a polycarbonate base substrate. In the "Coating", after a polycarbonate base substrate was fabricated by injection molding, a primer layer forming material and a silicone hard-coat layer forming material were applied by the spin coating method and laminated by heating in an oven. | | | | | | | | | | | | | | |

### DESCRIPTION OF REFERENCE SIGNS

- 1:: Organic glass base substrate
- 1a:: Polycarbonate base substrate
- 1b:: Polymethyl methacrylate base substrate
- 1c:: Polymethyl methacrylate base substrate
- 2:: Primer layer
- 3:: Hard-coat layer
- 4:: Adhesive layer
- 5:: Resin film layer
- 6:: Support film layer

## Claims

1. An organic glass laminate having at least an organic glass base substrate, a primer layer, and a hard-coat layer in this order, wherein
the hard-coat layer is formed of a cured product of a resin composition containing an ionizing-radiation-curable resin and an ultraviolet absorbent; the ultraviolet absorbent is contained at 0.5 to 10 parts by mass per a total of 100 parts by mass of the ionizing-radiation-curable resin;
the pencil hardness as measured from the hard-coat layer side is HB or more and 2H or less;
the haze is 3% or less, and the difference in the haze before and after the following accelerated weathering test is 20% or less; and
the yellow index is 2 or less, and the difference in the yellow index before and after the following accelerated weathering test is 5 or less, where,
(accelerated weathering test)
by using an accelerated weathering tester, a total sum of 50 cycles is carried out, with one cycle being under the following conditions (1), (2), and (3):
(1) ultraviolet ray being radiated at 60 mW/cm², 63°C, and 50 RH% for 20 hours,
(2) in darkness at 30°C and 98 RH% for 4 hours, and
(3) water being sprayed for 30 seconds before and after the condition (2).

2. An organic glass laminate having at least an organic glass base substrate, a primer layer, and a hard-coat layer in this order, wherein
the hard-coat layer is formed of a cured product of a resin composition containing an ionizing-radiation-curable resin and an ultraviolet absorbent; the ultraviolet absorbent is contained at 0.5 to 10 parts by mass per a total of 100 parts by mass of the ionizing-radiation-curable resin; and
the ionizing-radiation-curable resin contains (i) a tri- or more functional ionizing-radiation-curable resin and (ii) a bifunctional (meth)acrylate monomer in which two (meth)acryloyl groups are bonded via an aliphatic linker region.

3. The organic glass laminate according to claim 2, wherein the molecular weight of the (ii) bifunctional (meth)acrylate monomer is 1200 or less.

4. The organic glass laminate according to claim 2 or 3, wherein the (ii) bifunctional (meth)acrylate monomer is (ii-1) a (meth)acrylate monomer in which two (meth)acryloyl groups are bonded to one alicyclic ring or aliphatic heterocyclic ring directly or via a linker region having a molecular weight of 200 or less, or (ii-2) a bifunctional urethane (meth)acrylate monomer in which two (meth)acryloyl groups are bonded via an aliphatic chain having a urethane bond.

5. The organic glass laminate according to any one of claims 1 to 4, wherein the hard-coat layer has a thickness of 1 to 10 µm.

6. The organic glass laminate according to any one of claims 2 to 5, wherein the (ii) bifunctional (meth)acrylate monomer is contained at 1 to 40 parts by mass per a total of 100 parts by mass of the (i) tri- or more functional ionizing-radiation-curable resin.

7. The organic glass laminate according to any one of claims 1 to 6, wherein the organic glass base substrate is a base substrate made of polycarbonate.

8. A laminating sheet for use in organic glass having at least a primer layer and a hard-coat layer in this order and being used for lamination onto an organic glass base substrate, wherein
the hard-coat layer is formed of a cured product of a resin composition containing an ionizing-radiation-curable resin and an ultraviolet absorbent;
the ionizing-radiation-curable resin contains (i) a tri- or more functional ionizing-radiation-curable resin and (ii) a bifunctional (meth)acrylate monomer in which two (meth)acryloyl groups are bonded via an aliphatic linker region; and
the ultraviolet absorbent is contained at 0.5 to 10 parts by mass per a total of 100 parts by mass of the ionizing-radiation-curable resin.

9. The laminating sheet for use in organic glass according to claim 8, wherein the (ii) bifunctional (meth)acrylate monomer is (ii-1) a (meth)acrylate monomer in which two (meth)acryloyl groups are bonded to one alicyclic ring or aliphatic heterocyclic ring directly or via a linker region having a molecular weight of 200 or less, or (ii-2) a bifunctional urethane (meth)acrylate monomer in which two (meth)acryloyl groups are bonded via an aliphatic chain having a urethane bond.

10. The laminating sheet for use in organic glass according to claim 8 or 9. wherein
a resin film layer or an adhesive layer is disposed on a surface on the side that is to be brought into contact with the organic glass base substrate.

11. The laminating sheet for use in organic glass according to any one of claims 8 to 10, which is formed by laminating at least the hard-coat layer, the primer layer, and the adhesive layer sequentially on a support film layer.

12. The laminating sheet for use in organic glass according to any one of claims 8 to 11, which is to be integrated and laminated onto the organic glass base substrate at the time of injection molding of the organic glass base substrate, wherein
the resin film layer or the adhesive layer is disposed on a surface on the side that is to be brought into contact with the organic glass base substrate.

13. A method for producing an organic glass laminate, comprising a step of sticking a surface of the resin film layer or the adhesive layer of the laminating sheet for use in organic glass according to claim 10 or 11 onto the organic glass base substrate.

14. A method for producing an organic glass laminate, comprising a step of injecting and molding an organic glass onto the resin film layer or the adhesive layer of the laminating sheet for use in organic glass according to claim 12.
